(19) Europäisches Patentamt

European Patent Office

Office européen des brevets

(11) EP 0 382 564 B1

(12) **EUROPEAN PATENT SPECIFICATION**

(45) Date of publication and mention
of the grant of the patent:
**14.05.1997 Bulletin 1997/20**

(51) Int Cl.⁶: **G02B 7/34**

(21) Application number: **90301411.6**

(22) Date of filing: **09.02.1990**

(54) **Focus state detecting device**

Vorrichtung zur Feststellung des Fokussierungszustandes

Dispositif pour la détermination de l'état de mise au point

(84) Designated Contracting States:
**DE FR GB**

(30) Priority: **10.02.1989 JP 32282/89**

(43) Date of publication of application:
**16.08.1990 Bulletin 1990/33**

(73) Proprietor: **NIKON CORPORATION**
**Tokyo (JP)**

(72) Inventors:
• **Uchiyama, Shigeyuki**
**Setagaya-ku, Tokyo (JP)**
• **Kusaka, Yosuke**
**Yokohama-shi, Kanagawa-ken (JP)**

(74) Representative: **Burke, Steven David et al**
**R.G.C. Jenkins & Co.**
**26 Caxton Street**
**London SW1H 0RJ (GB)**

(56) References cited:
**US-A- 4 636 624**      **US-A- 4 851 657**

• **PATENT ABSTRACTS OF JAPAN vol. 14, no. 158 (P-1027)(4101) March 27, 1990 & JP-A-2 15 218 (MINOLTA CAMERA CO LTD ) January 18, 1990**
• **PATENT ABSTRACTS OF JAPAN vol. 14, no. 70 (E-886)(4013) February 8, 1990 & JP-A-1 288 178 (MINOLTA CAMERA CO LTD ) November 20, 1989**
• **PATENT ABSTRACTS OF JAPAN vol. 10, no. 143 (P-459)(2200) May 27, 1986 & JP-A- 60 262 004 (NIHON K.K. ) December 25, 1985**
• **PATENT ABSTRACTS OF JAPAN vol. 10, no. 220 (P-482)(2276) July 31, 1986 & JP-A- 61 55 618 (CANON INC ) March 20, 1986**

**Description**

BACKGROUND OF THE INVENTION

Field of the Invention

The present invention relates to a focus state detecting device utilizing image sensor arrays, and more particularly to an automatic focus state detecting device for use in automatic focusing control of a camera.

Related Background Art

There is already known a focus state detecting device of this kind, in which an image of the object formed by an objective lens (image taking lens) is focused again by a re-imaging optical system as two images onto a pair of image sensor arrays, and the focus state is calculated from the outputs of said image sensor arrays to determine the positional aberration of said two images, thereby detecting the focus state of the objective lens.

However, in a camera equipped with such focus state detecting device, if plural objects of different distances are present in a distance measuring zone defined in the view finder frame, there are often encountered inconveniences that an intermediate distance of such objects is identified as the best focus position, or that the focus state detection becomes impossible.

For this reason there is already known a method of dividing the distance measuring zone into plural blocks, and focusing the objective lens based on the results of plural focus state detections conducted in said plural blocks.

For example, the Japanese Laid-open Patents Sho 60-262004, Sho 61-55618, Sho 62-163007 and Sho 62-155608 disclose a method of dividing the image of the object by dividing the paired image sensor arrays into plural blocks, effecting the focus state detection in each of said plural blocks, selecting a block containing the closest object or the object with a largest contrast based on the results of said plural focus state detections, and focusing the objective lens according to the result of focus state detection in thus selected block.

Said paired image sensor arrays are generally composed of CCD image sensors.

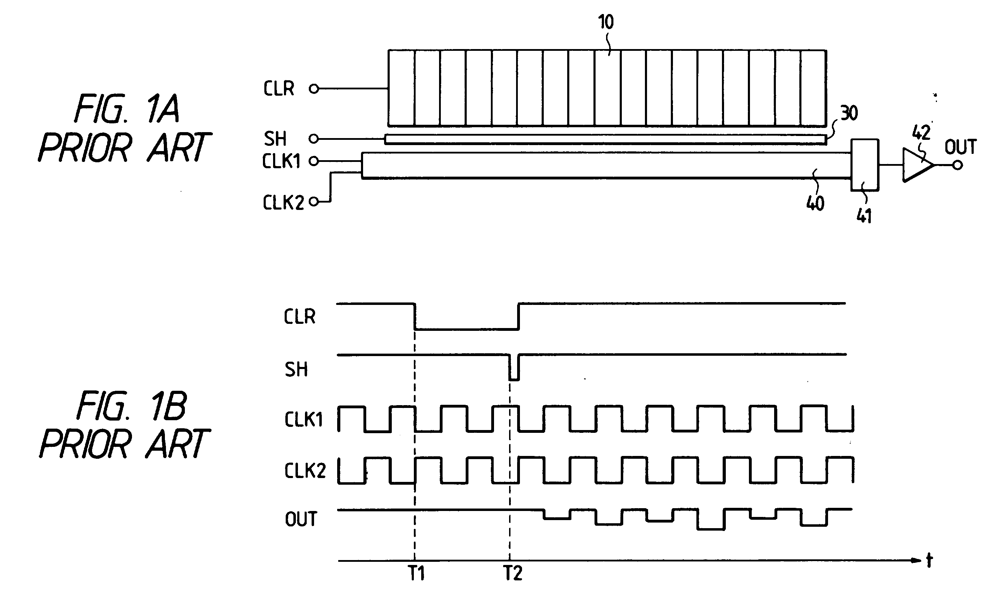

Now reference is made to Fig. 1 for explaining the function of a CCD image sensor.

Fig. 1A shows the structure of a CCD image sensor, which is composed of a photosensor array 10 consisting of plural photosensors for photoelectric conversion, a shift register 40 for charge transfer, and a shift gate 30 for transferring the charges generated and accumulated in the photosensors of the array 10 to the shift register 40.

The shift register 40, receiving a two-phase clock signal consisting of a clock signal CLK1 and a phase-inverted clock signal CLK2, is connected to an output terminal OUT through a voltage conversion unit 41 and a buffer 42.

The photosensor array 10 receives a clear pulse CLR for controlling the accumulating operation from a terminal CLR. The shift gate 30 positioned between the photosensor array 10 and the shift register 40 is connected to a terminal SH.

The function of such CCD image sensor will be explained in the following, with reference to Fig. 1B.

At a time T1, the terminal CLR is shifted from the H-level to the L-level, whereby the charges generated in the photosensor array 10 start to be accumulated in respective photosensors. At a time T2 after the lapse of a predetermined time, an L-level pulse is given to the terminal SH whereby the charges generated in the photosensors of the array 10 in a period from T1 to T2 are transferred in parallel manner to the shift register 40. The shift register 40 transfers said charges from left to right by the two-phase clock signals consisting of the clock signal CLK1 and the phase-inverted clock signal thereof. Said charges are converted into voltages by the voltage conversion unit 41, and are time-sequentially released through the buffer 42 and the terminal OUT.

The predetermined time from T1 to T2 is called the accumulation time, which is selected shorter or longer as the brightness of the object is higher or lower, in order to obtain a contrast enabling the focus state detecting operation, thereby obtaining an almost constant output regardless of the brightness of the object.

However such prior art has been associated with following drawbacks in case plural objects of different brightnesses are present in the distance measuring zone.

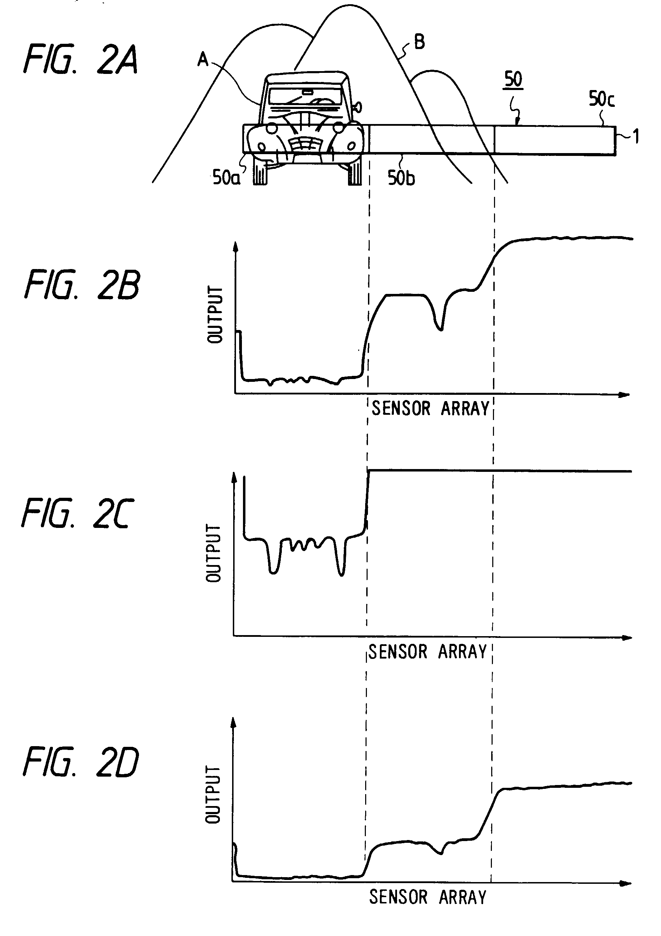

Fig. 2A shows an example of the object field in the view finder, containing a distance measuring zone 50. The image of the object present in said zone 50 is projected onto the image sensor arrays, and said zone 50 is divided into three blocks 50a, 50b and 50c.

Now let us consider an example of an object A present in the block 50a and a more distant object B in the block 50b. It is assumed that the background is sky with highest brightness, and that the brightness becomes lower in the order of the object B and then the object A. When such objects A, B and the background sky are projected on the image sensors, the selection of the accumulating time is difficult to determine.

If the accumulation time is determined based on the brightness of the object B, the image sensor array will provide an output as shown in Fig. 2B, wherein the output of the block 50a is too small for the focus state detecting operation.

While the block 50b provides an output suitable for the focus state detecting operation, the block 50c, only containing the sky, provides an output but the focus state detecting operation is impossible because of lack of contrast. In this case, therefore, the focus state detecting operation is possible only for the object B present in the block 50b, and the objective lens is so driven as to be focused to said object B.

Then, if the accumulation time is determined longer than in the case of Fig. 2B, based on the brightness of the object A, the image sensor array provides an output as shown in Fig. 2C, wherein the block 50a provides an output with a contrast suitable for the focus state detecting operation, but the blocks 50b and 50c provide saturated output without contrast because of the excessively high brightness in comparison with the accumulation time. Consequently the objective lens is so driven as to be focused to the object A present in the block 50a.

On the other hand, if the accumulation time is determined according to the brightness of the background sky, there is obtained an output as shown in Fig. 2D, wherein the focus state detecting operation is impossible in the block 50a because of the low output. Said operation is possible in the block 50b but is unstable because of the low output, and is impossible in the block 50c because of lack of contrast. Thus the objective lens is so driven as to be focused to the object B in the block 50b, but precise focusing cannot be achieved because the low output leads to an unstable result of focus state detection.

Thus, if plural objections with significant difference in brightness are present in the distance measure zone, the object to be focused may be undesirably selected or the precision of focusing may be deteriorated, depending on the method of selecting the accumulation time for the image sensor arrays. For example, when it is desired to focus the lens to the closest object in the distance measuring zone, the focus state detecting operation for such object becomes impossible if an accumulation time suitable for another object is selected.

The document US-A-4 636 624 discloses a focus detecting device in which levels of output signals from a CCD are varied according to the intensity of incident light.

## SUMMARY OF THE INVENTION

According to one aspect of the present invention there is provided a focus detecting device, comprising: a plurality of groups of photosensors, each group being arranged to receive light from a respective part of an image field and to output a corresponding set of output signals; regulating means for regulating the output signals in accordance with the brightness of the light falling on the photosensors; focus information generating means for receiving the regulated output signals and generating focus information therefrom, and means for selecting optimum focus information from the focus information derived from the regulated sets of output signals; characterised in that the regulating means includes detecting means for detecting a plurality of levels each corresponding to one of said sets of output signals and in that the regulating means is arranged to regulate the levels of each set of output signals in accordance with the corresponding one of the detected levels, so that the levels of each regulated set are suitable for generation of focus information by said focus information generating means.

According to another aspect of the present invention there is provided a method of detecting a focus state using groups of photosensors, each group receiving light from a respective part of an image field and outputting a corresponding set of output signals, said method comprising: regulating the output signals in accordance with the brightness of the light falling on the photosensors; receiving the regulated output signals, generating focus information therefrom and selecting optimum focus information from the focus information derived from the regulated sets of output signals; characterised by detecting a plurality of levels each corresponding to one of said sets of output signals; and in that each set of output signals is regulated in accordance with the corres-ponding one of the detected levels, so that the levels of each regulated set are suitable for generation of focus information.

Thus, there may be provided a focus state detecting device capable of securely focusing the objective lens to a desired object, even in a case where plural objects of significant difference in brightness are present in the distance measuring zone.

The present invention is firstly applicable to a focus state detecting device in which the image of the object in the distance measuring zone is divided into two images by a re-imaging optical system including an objective lens, thus projecting respective light beams of said images emerging from different exit pupils of the objective lens onto a pair of image sensor arrays of charge accumulation type (linear CCD's), dividing said distance measuring zone into plural blocks and calculating the focusing information in each of said blocks based on the output signals of said image sensor arrays.

The following three means may be provided in such focus state detecting device.

[Accumulation time control method]

There are provided level discriminating means for discriminating whether the output signals of each block of the image sensor arrays are in a signal level appropriate for the calculation of focusing information; accumulation time control means for selecting an accumulation time, for obtaining output signals of an appropriate level, for a block of which signal level is identified as inappropriate by said level discriminating means, thereby obtaining the output signals again from the image sensor arrays; and operation means for obtaining the focus detection information from the output signals identified as appropriate by said level discriminating means.

[Gain control method]

There are provided an amplifier with controllable gain for amplifying the output signals of said image sensor arrays, level discriminating means for discriminating whether the output signals of said amplifier are in a signal level appropriate for the calculation of focusing information; gain control means for calculating a gain for obtaining an appropriate level, for a block identified as inappropriate by said level discriminating means, thereby obtaining the output signals again from said image sensor arrays after said selected gain is set in said amplifier; and operation means for calculating the focusing information on the output signals identified as appropriate by said level discrimination means.

[Filter coefficient control method]

This method is based on the calculation of the focusing information from a new series of data obtained by a certain filtering process applied on the output signals of each block of the image sensor arrays.

In the present filter coefficient control method, there are provided level discriminating means for discriminating whether the output signals of each block of the image sensor arrays are in a signal level appropriate for the calculation of focusing information; filter control means for determining coefficients of said filtering process for obtaining an appropriate signal level, for a block identified as inappropriate by said level discriminating means, thereby effecting said filtering process again to obtain a new series of data; and operation means for calculating the focusing information on the output signals identified as appropriate by said level discriminating means.

In any method, if the focusing information arbitrarily selected from plural information obtained at first indicates an out-of-focus state requiring another focus state detection after the focusing operation, an accumulation time corresponding to the selected result is determined for the next accumulation cycle, and, in the next and ensuing cycles, the focus state detection is conducted only in the selected block, thereby dispensing with the control on the accumulation time, gain or filtering coefficients.

The present invention can be applied to the example shown in Fig. 2 in the following manner.

At first, in the accumulation time control method, the charge accumulation is conducted three times with accumulation times respectively suitable for the brightnesses of the object A, object B and background sky, so that the output suitable for focus state detection can be obtained for all the objects.

In the gain control method, the accumulation time is so selected as to obtain an output as shown in Fig. 2B, and the gain of the amplifier is selected higher in the transfer of the output for the object A, than in the transfer of the output for the object B or the background sky, whereby an output suitable for focus state detection is obtained for all the objects.

In the filtering coefficient control method, the accumulation time is initially so selected as to obtain an output as shown in Fig. 2B, and at least two output signals (a pair of output signals obtained by dividing the object image into two images by the re-imaging optical system) in each block of the CCD image sensor arrays are synthesized, by correlation calculation, to obtain a new series of data. The filtering coefficients used in this operation are selected higher for the output corresponding to the object A than for the object B or the background sky, thereby obtaining new data appropriate for focus state detection for all the objects.

Then, from the plural results obtained by focus state detections in any of these methods, a result satisfying certain conditions is selected, and the next accumulation time is determined by the output of a block which gave said selected result, whereby, in the next charge accumulation, the object present in the selected block provides an optimum output level for the focus state detection.

Therefore, the relationship of distances of the objects present in the distance measuring zone is clarified in the first charge accumulation, and, if the closest object, for example, is selected, the charge accumulation and the calculation in the second and ensuing cycles are conducted with preference to thus selected closest object, so that the objective lens can be focused to said object with sufficient precision.

BRIEF DESCRIPTION OF THE DRAWINGS

Specific embodiments of the present invention will now be described in detail with reference to the accompanying drawings, in which:-

Figs. 1A and 1B are schematic views of a conventional CCD image sensor;
Figs. 2A to 2D are views showing the change in the output signal when plural objects with significant difference in brightness are present in the distance measuring zone;
Fig. 3 is a block diagram of the device of the present invention;
Fig. 4 is a schematic view of an image sensor chip employed in the present invention;
Fig. 5 is a timing chart showing the function of the image sensor array shown in Fig. 4;
Figs. 6A and 6B are circuit diagrams of a second controller shown in Fig. 3;
Figs. 7A and 7B are schematic views showing the block division of the image sensor array in the present invention;
Figs. 8A and 8B are charts showing the focus state detecting operation in the present invention;
Fig. 9 is a flow chart of the control sequence in a first embodiment of the present invention;
Fig. 10 is a flow chart of the control sequence in a second embodiment;
Fig. 11 is a chart showing the gain change of a variable-gain amplifier in the second embodiment shown in Fig. 10;
Fig. 12 is a flow chart of the control sequence in a third embodiment;
Fig. 13 is a block diagram of a fourth embodiment of the present invention;
Fig. 14 is a circuit diagram of the fourth embodiment;
Fig. 15 is a flow chart of the control sequence of the fourth embodiment;
Fig. 16 is a block diagram of a fifth embodiment of the present invention;
Fig. 17 is a circuit diagram of a fourth controller therein; and
Fig. 18 is a flow chart of the control sequence of the fifth embodiment.

## DESCRIPTION OF THE PREFERRED EMBODIMENTS

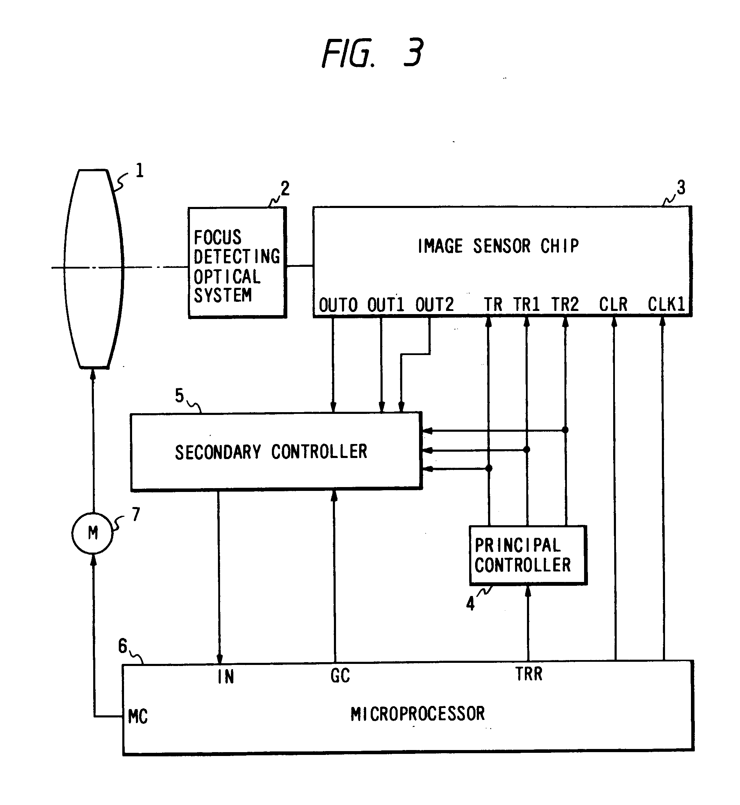

Fig. 3 schematically shows the structure of a device in an embodiment of the present invention.

As shown in Fig. 3, the device is provided with an image sensor chip 3 including image sensor arrays; a focus detection optical system 2 for projecting the light, transmitted by an objective (photographing) lens 1 onto the image sensor arrays; a motor 7 for driving the objective lens 1; a microprocessor 6 for effecting the focus state detecting operation and controlling the accumulation time of the image sensor arrays and the motor 7; and a first controller 4 and a second controller 5 for controlling the signals between the image sensor chip 3 and the microprocessor 6.

The image sensor chip 3 is provided with input ports TR, TR1, TR2, CLR and CLK1, and output ports OUT0, OUT1 and OUT2. The output ports OUT0, OUT1, OUT2 are connected to the second controller 5; the ports CLR, CLK1 to the microprocessor 6; and the input ports TR, TR2, TR1 to the first controller 4.

Signals released from the first controller 4 to the ports TR, TR1, TR2 are also also-supplied to the second controller 5. An output port TRR of the microprocessor 6 is connected to the first controller 4; an output port GC and an input port IN are both connected to the second controller 5, and an output port MC is connected to the motor 7.

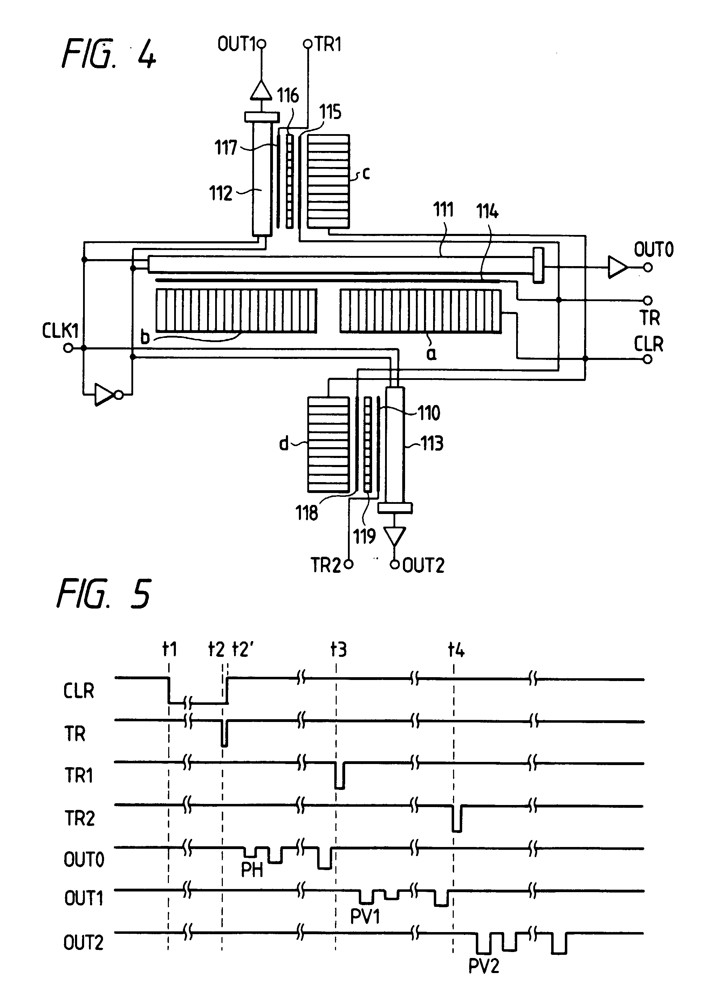

In the following there will be explained, with reference to Fig. 4, the structure of the image sensor chip 3 shown in Fig. 3.

As shown in Fig. 4, the image sensor chip 3 is provided with a pair of image sensor arrays a, b positioned along the lateral direction, and other image sensor arrays c, d perpendicular to the arrays a, b. The vertical image sensor arrays c, d serve to effect focus state detection in the vertical direction, even for an object showing contrast only in the vertical direction, such as a horizontal line.

Parallel to the image sensor arrays a, b, c, d, there are provided first, second and third shift registers 111, 112, 113 for releasing the output signals of said image sensor arrays from output terminals OUT0, OUT1, OUT2. Between the image sensor arrays c, d and the shift registers 112, 113 there are provided memory units 116, 119 for temporarily storing the charge signals respectively corresponding to the photosensors of the image sensor arrays c, d and transferring said signals to the shift registers 112, 113 after a predetermined time.

There are provided a shift gate 114 for transferring the charge signals accumulated in the photosensors of the image sensor arrays a, b to the shift register 111; shift gates 115, 118 for transferring the charge signals accumulated in the photosensors of the image sensor arrays c, d to the memory units 116, 119; and transfer gates 117, 110 positioned between the memory units 116, 119 and the shift registers 112, 113 for transferring the charge signals accumulated in the memory elements of the memory units 116, 119 to said shift registers 112, 113.

The input terminal CLR is connected to all the image sensor arrays a, b, c, d and causes the photosensors to accumulate charges corresponding to the incident light, only during the period of L-level input signal. The input terminal CLK1 is connected to all the shift registers 111, 112, 113 for causing said registers to transfer the output charges from the image sensor arrays a, b, c, d in response to transfer pulses.

The first controller 4 releases digital trigger pulses to the ports TR, TR1, TR2 in response to signals entered from the port TRR of the microprocessor 6. The trigger pulse supplied to the port TR acts simultaneously on the shift gates 114, 115, 118, thus causing the transfer of the charge signals accumulated in the image sensor arrays a, b, c, d. The trigger pulses supplied to the ports TR1, TR2 act respectively the transfer gates 117, 110 at different times, thereby causing the transfer of the charges stored in the memory units 116, 119.

In the following explained is the function of the image sensor chip shown in Fig. 4, with reference to a timing chart shown in Fig. 5.

The image sensor arrays a, b, c, d simultaneously start charge accumulation at a time t1 when the digital signal to the input terminal CLR is shifted to the L-level. At a time t2, the first controller 4 sends a pulse to the shift gate 114 through the port TR, whereby the charge signals of the image sensor arrays a, b are transferred to the shift register 111 and released from the output terminal OUT0 as a time-sequential signal PH in response to the transfer pulses. At the same time t2, the charge signals of the image sensor arrays c, d are transferred, respectively, to the memory units 116, 119 through the shift gates 115, 118.

Then the first controller 4 sends a pulse to the port TR1 at a time t3 when the charge transfer from the image sensor array a, b to the shift register 111 is completed, thereby transferring the charge signals of the image sensor array c stored in the memory unit 116 to the shift register 112 and releasing said signals from the output terminal OUT1 as a time-sequential signal PV1.

Also after the signal transfer from the image sensor array c, the first controller 4 sends a pulse, at a time t4, to the port TR2, thereby transferring the charge signals of the array d stored in the memory unit 119 to the shift register 113 and releasing said signals from the output terminal OUT2 as a time-sequential signal PV2.

The image sensor array chip 3 of the above-explained structure allows, therefore, to obtain the charge signals released in parallel manner from the image sensor arrays a, b, c, d, in the form of time-sequential signals from the output terminals OUT0, OUT1, OUT2 without mutual overlapping.

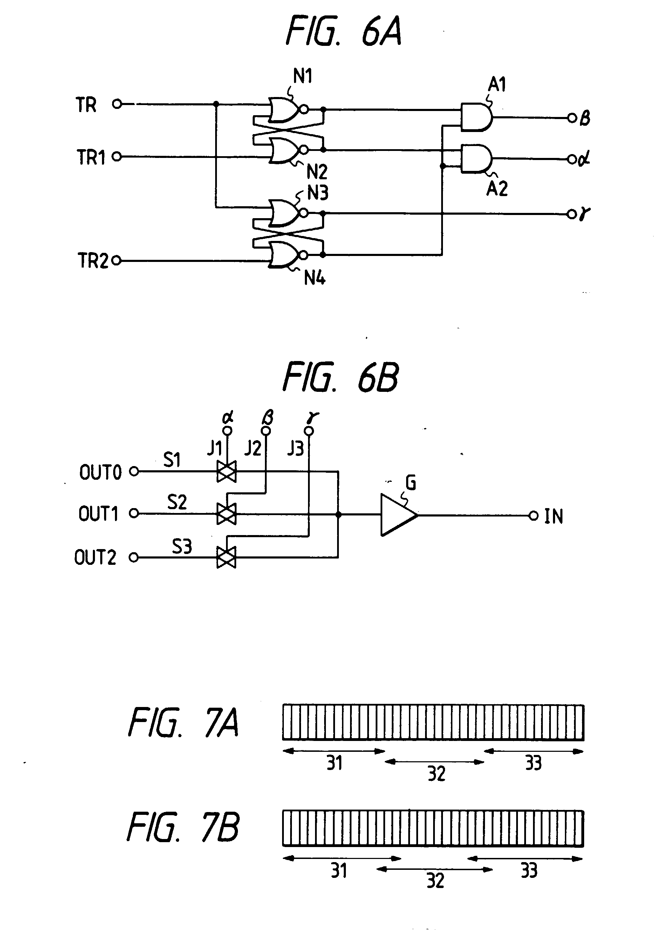

Now reference is made to Fig. 6 for explaining the structure of the second controller 5 shown in Fig. 3.

The second controller 5 serves to apply gains determined by the microprocessor 6 on the output signals from the output terminals OUT0, OUT1, OUT2 of the image sensor array chip 3, and supply said three output signals in united manner to an input port IN of the microprocessor 6.

The output terminals OUT0, OUT1, OUT2 of the chip 3 are respectively connected to switches S1, S2 S3 shown in Fig. 6B, which are controlled by signals $\alpha$, $\beta$, $\gamma$ supplied to control terminals J1, J2, J3. The output terminals of said switches S1, S2, S3 are united and connected to a variable-gain amplifier G, of which gain is set by plural digital signals or an analog signal from a port GC of the microprocessor 6.

Fig. 6A shows a control circuit for producing the control signals to control terminals J1, J2, J3 of said switches, based on the signals supplied from the first controller 4 to the ports TR, TR1, TR2 of the image sensor array chip 3, and is composed of NOR gate N1, N2, N3, N4 and AND gates A1, A2.

In the following there will be explained the function of the second controller 5.

The pulse supplied from the first controller 4 to the port TR for terminating the charge accumulation in the image sensor arrays a, b, c, d is supplied also to the control circuit shown in Fig. 6A, whereby the control signal $\alpha$ to the control terminal J1 alone is shifted to the H-level. Thus the switch S1 alone is closed so that the signal of the image sensor arrays a, b from the terminal OUT0 alone is supplied, through the variable-gain amplifier G, to the port IN of the microprocessor 6.

Also the pulse supplied from the first controller 4 to the port TR1 upon completion of the signals of the image sensor arrays a, b is supplied also to the control circuit shown in Fig. 6A whereby the control signal $\beta$ to the control terminal J2 alone is shifted to the H-level. Thus the switch S2 alone is turned on so that the signal of the image sensor array c from the terminal OUT1 alone is supplied, through the variable-gain amplifier G, to the port IN of the microprocessor 6.

Furthermore, the pulse supplied from the first controller 4 to the port TR2 upon completion of the signal transfer from the image sensor array c, is also supplied to the control circuit shown in Fig. 6A, whereby the control signal $\gamma$ to the control terminal J3 alone is shifted to the H-level. Thus the switch S3 alone is turned on, and the signal of the image sensor array d is supplied, through the variable-gain amplifier G, to the port IN of the microprocessor 6. The gain setting of said amplifier G will be explained later.

Now reference is made to Fig. 7 for explaining the method of block division of the image sensor arrays shown in Fig. 4.

In Fig. 4, the image sensor arrays c, d positioned vertically in the photographing frame are not divided into blocks, as they contain fewer photosensors in comparison with those of the horizontal image sensor arrays a, b. Thus said image sensor arrays a, b alone are divided into blocks.

Fig. 7 illustrates one of the paired image sensor arrays a, b, and the method of block division is common for said arrays a and b.

There are generally two methods of block division, either as shown in Fig. 7A in which blocks 31, 32, 33 are not mutually overlapping, or as shown in Fig. 7B in which neighboring blocks 31 and 32, or 32 and 33, are mutually overlapping.

Thus the image sensor arrays a, b are respectively divided into three blocks 31a, 32a, 33a and 31b, 32b, 32c. The undivided image sensor arrays c, d are respectively called blocks 34c, 34d which constitute a block 34.

Consequently the calculation for focus state detection is conducted in the microprocessor 6, utilizing paired data of the blocks 31a, 31b; 32a, 32b; 33a, 33b; and 34c, 34d. The output signals of the image sensor arrays are sent to the microprocessor 6 in the order of a, b, c and d so that the microprocessor 6 receives the data of the blocks in the order of 31a, 32a, 33a, 31b, 32b, 33b, 34c and 34d.

Now there will be explained the function of the microprocessor 6 shown in Fig. 3.

The microprocessor 6 supplies the image sensor chip 3 with the signal for starting the charge accumulation as shown in Figs. 4 and 5 through the terminal CLR, and the transfer gates 111, 112, 113 with the clock signal CLK1. It also supplies the first controller 4 with the signal for terminating the charge accumulation of the image sensor chip 3 through the port TRR, and sets the gain of the variable-gain amplifier of the second controller 5 as shown in Fig. 6.

Also the microprocessor 6 receives the data of the image sensor arrays from the second controller 5 through the port IN, converts said data into digital signals by an internal A/D converter, and stores thus converted data in an internal memory. Said A/D converter may be provided outside the microprocessor 6, but an internal converter is preferred for use in a camera with limited space therein. If a signal exceeding the upper limit of input to the A/D converter is entered, the data obtained after said A/D conversion become saturated, so that the image of the object projected on the image sensor arrays cannot be reproduced.

The microprocessor 6 executes the calculation for focus state detection, utilizing the paired data stored in the memory. Since the method of said calculation is already disclosed for example in the U.S. Patent No. 4,561,749 of the present applicant, and will therefore be explained only briefly in the following.

The data:

$a(1),..., a(n)$ and
$b(1),..., b(n)$

of a pair of image sensor arrays are used for determining the correlation coefficient $C(L)$ with a mutual shift $L$ of data, according to an equation:

$$C(L) = \sum_{i=k}^{r} |a(i) - b(j)| \qquad \ldots (1)$$

wherein

$j - i = L$, and
$L = -Lm,..., -2, -1, 0, 1, 2,..., Lm$

$L$ is an integer corresponding to the amount of shift of the group of data, and the initial term $k$ and the final term $r$ may be varied depending on the shift amount $L$. The in-focus point is indicated by a shift amount $L$ providing the minimum correlation $C(L)$.

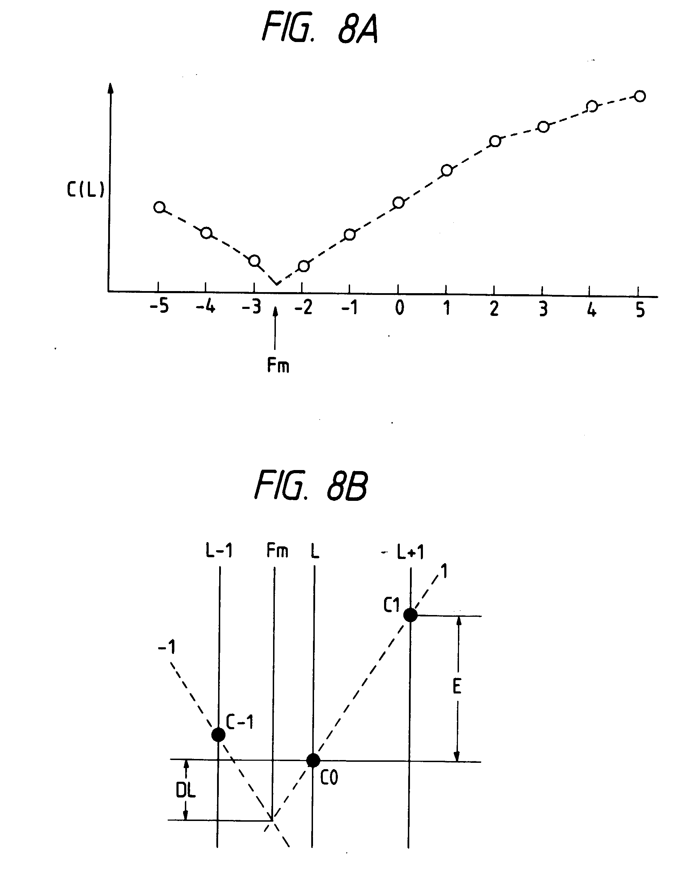

However the correlation $C(L)$ is given as scattered values as shown in Fig. 8A, and the detectable minimum value is limited by the pitch of the image sensor arrays. Therefore the present applicant disclosed, in the Japanese Laid-open Patent Sho 60-37513, a method of more detailed focus state detection by determining a new minimum value $Cex$ through an interpolation based on the scattered values of correlation $C(L)$.

Said interpolation is conducted, as shown in Fig. 8B, from the minimum correlation $C_0$ and correlations $C_{-1}$, $C_1$ at the adjacent shifts on both sides, and the in-focus position $Fm$, or the shift amount providing the minimum $Cex$ is given by the following equations:

$$DL = (C_{-1} - C_1)/2,$$

$$Cex = C_0 - |DL|,$$

$$E = MAX\{C_1 - C_0, C_{-1} - C_0\}$$

$$F_m = L + DL/E \qquad (2)$$

wherein $MAX\{Ca, Cb\}$ indicates to select the larger of $Ca$ and $Cb$.

It is necessary to discriminate whether the thus obtained minumum $Cex$ really indicates the infocus position or it is caused by a fluctuation of correlation resulting for example from noise. The minimum value $Cex$ is identified as reliable when the following condition is satisfied, and the calculation of the focus state detection is completed:

E > Est and Cex/E < Cst

wherein Est and Cst are predetermined values.

In the foregoing explanation, the data of the image sensor arrays are directly utilized in the calculation, but the Japanese Laid-open Patent Sho 61-245123 disclosed a method of preparing a pair of new data by applying a filtering process such as elimination of high- or low-frequency components to the data of the image sensor arrays and effecting the calculation of focus state detection with thus processed data.

The data after elimination of high-frequency components:

a'(1),..., a'(m),
b'(1),..., b'(m)

can be calculated from the original data:

a(1),..., a(n),
b(1),..., b(n)

according to the following equations:

$$a'(i) = \{a(2i - 1) + 3 \times a(2i) + 4 \times a(2i + 1)$$

$$+ 3 \times a(2i + 2) + a(2i + 3)\}/12$$

$$b'(i) = \{b(2i - 1) + 3 \times b(2i) + 4 \times b(2i + 1)$$

$$+ 3 \times b(2i + 2) + b(2i + 3)\}/12 \tag{3}$$

Also the data after elimination of low-frequency components:

a"(1),..., b"(q),
b"(1),..., b"(q)

can be obtained according to the following equations:

$$a''(i) = -a(i) + 2 \times a(i + h) - a(i + 2h) + offset,$$

$$b''(i) = -b(i) + 2 \times b(i + h) - b(i + 2h) + offset, \tag{4}$$

wherein h and offset are predetermined natural numbers.

In the equations (4), the "offset" is added in order that a"(i) and b"(i) do not become negative. Said elimination of the low-frequency components may be applied to the output data a(i), b(i) of the image sensor arrays as shown in (4), or to the data a'(i), b'(i) after the elimination of the high-frequency components. The use of such filtered data in the calculation of focus state detection provides an improved precision, in comparison with the calculation with the unprocessed data of the image sensor arrays.

The above-explained calculation for focus state detection provides four results at maximum, then a result indicating the shortest distance, for example, is selected from these results, and the motor 7 is driven according to thus selected result, thereby moving the objective lens 1 to the in-focus position.

In the following there will be explained embodiments of the present invention, based on the focus detecting device of the above-explained structure.

A first embodiment of the present invention is to effect the charge accumulation of the image sensor arrays with an accumulation time appropriate for a block containing the object of highest brightness in the distance measuring zone, and to effect the charge accumulation again for a block in which an appropriate output could not be obtained in the first-mentioned charge accumulation, with an accumulation time appropriate for such block, thereby obtaining data appropriate for the calculation of focus state detection.

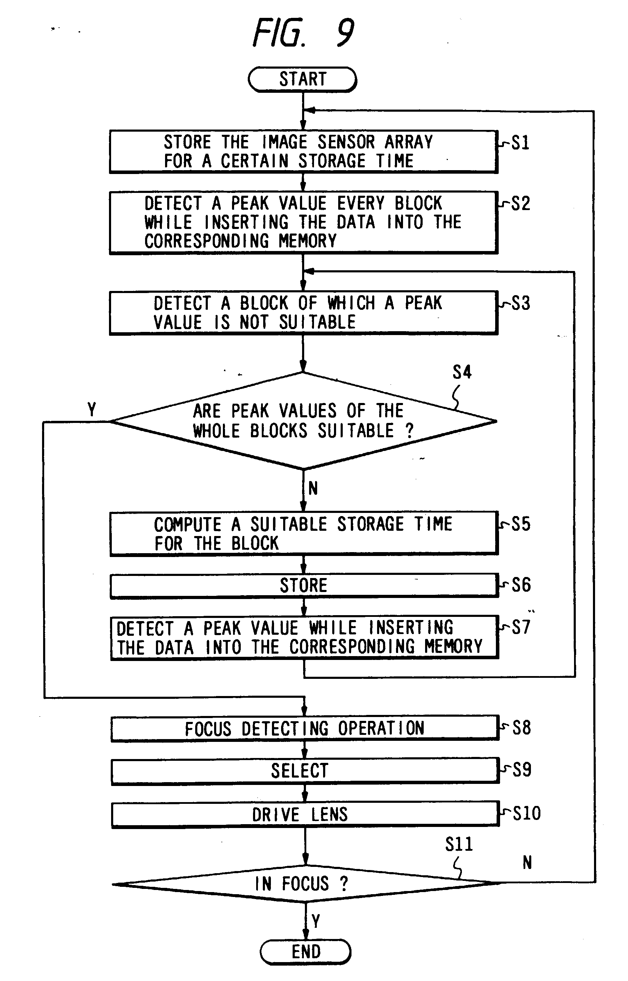

The function of said first embodiment is executed by the microprocessor 6, according to a flow chart shown in Fig. 9.

The sequence shown in Fig. 9 is started by turning on the power supply, for example by a half push of a shutter releasing button of the camera. At first a step 1 executes the charge accumulation of the image sensor arrays in order to evaluate the contrast of the image of the object projected on said arrays. The accumulation time for this purpose can be so selected as not to cause saturation in the A/D converter and as not to obtain an excessively low output, and can be determined, for example, according to the output of an unrepresented monitoring photosensor.

Upon completion of the charge accumulation in the step 1, a step 2 fetches the signal charges from the image sensor arrays and stores the obtained data in the memory areas corresponding to the blocks, with detection of following peak value in each block:

peak value P1 of the blocks 31a, 31b;
peak value P2 of the blocks 32a, 32b;
peak value P3 of the blocks 33a, 33b; and
peak value P4 of the blocks 34c, 34d.

Then a step 3 detects the peak value or values of an inappropriate level for the calculation of focus state detection to be executed in a step 8, among the peak values detected in the step 2. Said inappropriate level means, for example, outside a range of about ±15 % of the predetermined value Ps in the step 1.

Then a step 4 discriminates the presence of an inappropriate peak value, and, if such peak value is present, a step 5 calculates the accumulation time for obtaining a predetermined peak value Ps from the block of which previous peak value was identified as inappropriate.

The accumulation times T31, T32, T33, T34 respectively appropriate for the blocks 31, 32, 33, 34 are determined as follows:

$$T31 = Tr1 \times Ps/P1,$$

$$T32 = Tr2 \times Ps/P2,$$

$$T33 = Tr3 \times Ps/P3;$$

$$T34 = Tr4 \times Ps/P4 \tag{5}$$

wherein Tr1, Tr2, Tr3, Tr4 are accumulation times of the blocks in the preceding cycle. Thus:

Tr1 = Tr2 = Tr3 = Tr4 = T0 in which T0 is the accumulation time in the step 1.

After the calculation of the accumulation time in the step 5, a step 6 sets the accumulation time again and effects the charge accumulation of the image sensor arrays. Subsequently a step 7 stores the data from the image sensor arrays in respective memory areas, with the detection of peak value for each block, as in the step 2. In the step 7 the data of all the blocks 31, 32, 33, 34 are transferred from the image sensor arrays to the microprocessor 6 through the second controller 5, but, if the charge accumulation is conducted with a time appropriate, for example, to the block 32 of which peak value was identified as inappropriate in the preceding cycle, the data of the blocks 31, 33 and 34 are discarded without storage in the memory, and the data of the blocks 32a, 32b alone are stored in the corresponding memory. The time required for this operation can be shortened by transferring the data to be discarded with an increased frequency of the clock signal CLK1, and transferring the data of the necessary block with the normal frequency of the clock signal.

If appropriate data are obtained in the step 7 by resetting of the accumulation time for the block of which data were identified as inappropriate in the preceding cycle, the sequence returns to the step 3 for detecting the block with inappropriate peak value. If such block is still present, the steps 4 to 7 are executed to repeat the calculation and setting of the accumulation time, charge accumulation and data input. When the peak values of all the blocks are in the appropriate level, the sequence proceeds to a step 8 for effecting the focus state detection with four sets of paired data stored in the memory and identified as of the appropriate level.

The calculation of said step 8 for focus state detection provides four results at maximum. Then a step 9 selects a result indicating for example the shortest distance, and a step 10 drives the objective lens 1 to the in-focus position by the motor 7, according to thus selected result. If a next step 11 identifies the in-focus state, the focus detecting operation is terminated. On the other hand, if an out-of-focus state is identified, the sequence returns to the step 1 to repeat the operations of charge accumulation, data storage and focus state detection as explained above.

The discrimination of the step 11 of the focus state of the objective lens 1 is conducted in such a manner, for example, that an in-focus state is identified when the amount of drive of the motor 7 in the step 10 does not exceed a predetermined value.

The second accumulation time T when the sequence returns from the step 11 to the step 2 is calculated as follows:

$$T = Tr \times Ps/Pm \tag{6}$$

wherein Tr is the accumulation time in the step 1 of the preceding cycle. Pm is selected as the peak value of the block selected in the step 9, in order to effect the focus state detection with preference to the object in said selected block in the second and ensuing cycles, as the object to be focused is in said selected block, according to the result of calculation based on the preceding accumulation cycle.

In the second and ensuing cycles in which the block requiring focus state detection is already specified, it is not necessary to obtain the output signals appropriate for the focus state detection in all the blocks. It is therefore possible, after the data storage in the memory in the step 2, to skip the steps 3 and 4 and to immediately execute the step 8 for focus state detection.

Also as Pm in the equation (6), there may be employed the largest peak value among P1, P2, P3, P4 detected in the step 2.

The gain of the variable-gain amplifier of the second controller 5 in the first embodiment can be constant in the course of ordinary accumulation and data reading, but is controlled only in a special case under severe photographing conditions. More specifically said gain is controlled higher or lower for example when the entire object field is respectively very dark or very bright.

In the following there will be explained a second embodiment of the present invention.

Said second embodiment is to vary the gain of the variable-gain amplifier of the second controller 5 in the course of transfer of the data of the image sensor arrays, higher during the data transfer for a block including an object of a relatively low brightness in the distance measuring zone, and lower during the data transfer for a block including an object of a relatively high brightness, thereby obtaining the output appropriate for focus state detection in all the blocks.

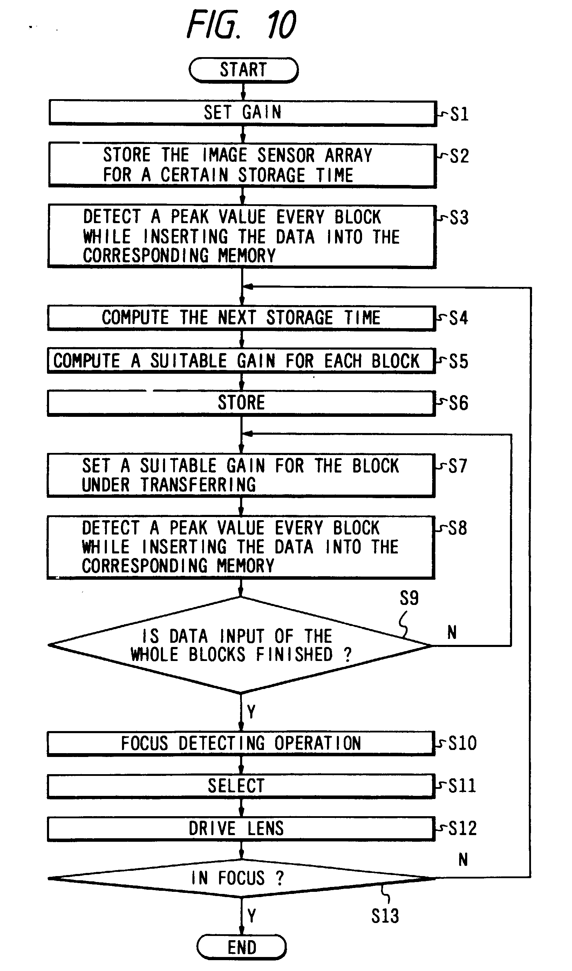

Now the function of said second embodiment will be explained in the following with reference to Fig. 10.

At first a step 1 sends a predetermined signal from the port GC to the second controller 5, thereby setting the gain of the variable-gain amplifier at a basic initial value G0, which is selected as the lowest possible gain for said amplifier, since a higher gain reduces the S/N ratio of the output signals of the image sensor arrays.

Then a step 2 executes the charge accumulation of the image sensor arrays, and a step 3 stores the data in memories corresponding to the blocks, with detection of the peak value in each block. The charge accumulation in said step 2 is to evaluate the contrast of the image of the object projected on the image sensor arrays, so that the accumulation time can be so selected as not to cause saturation in the A/D converter and not to obtain an excessively low output, and can be determined, for example, according to the output of an unrepresented monitoring photosensor.

Then a step 4 calculates the accumulation time T in the next cycle according to the following equation:

$$T = Tr \times Ps/Pm \tag{7}$$

wherein Pm is the largest of the peak values P1, P2, P3, P4 detected in the step 2, and Tr is the accumulation time in the preceding cycle.

The charge accumulation of the image sensor arrays with thus calculated accumulation time provides a largest value, approximately equal to Ps, among all the outputs of the image sensor arrays.

Then a step 5 calculates a gain appropriate for the output of each block. Said gain is calculated, on the peak value of each block, the accumulation time Tr in the preceding cycle, the gain in the preceding cycle and the accumulation time of the next cycle calculated in the step 4, in such a manner that a peak value equal to the predetermined value Ps is obtained in each block. More specifically, the appropriate gains G1, G2, G3, G4 of the blocks 31, 32, 33, 34 can be calculated from the gains Gr1, Gr2, Gr3, Gr4 in the preceding cycle according to the following equations:

$$G1 = Gr1 \times Ps/P1 \times Tr/T$$

$$G2 = Gr2 \times Ps/P2 \times Tr/T$$

$$G3 = Gr3 \times Ps/P3 \times Tr/T$$

$$G4 = Gr4 \times Ps/P4 \times Tr/T. \tag{8}$$

In the first process, the gain of the preceding cycle is G0 selected in the step 1, so that the step 4 provides:
Gr1 = Gr2 = Gr3 = Gr4 = G0

Then the sequence proceeds to a step 6 to execute the charge accumulation of the image sensor arrays with the accumulation time calculated in the step 4. Then a step 7 sets, at the data transfer from the image sensor arrays after the charge accumulation in the step 6, a gain appropriate for the block of the transferred data in the variable-gain amplifier.

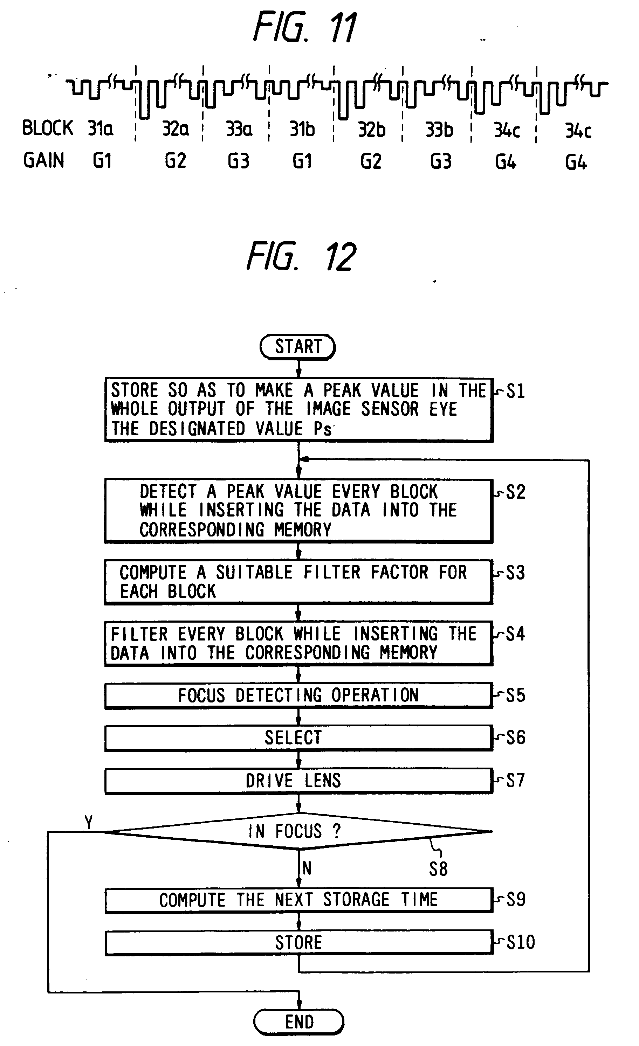

The gain switching in said step 7 is conducted, as shown in Fig. 11, to select a gain G1 for the data of the first transferred block 31a, then a gain G2 for the block 32a, G3 for the block 33a and G4 for the block 34c. Also a gain G1 is selected for the block 31b, G2 for the block 32b, G3 for the block 33b and G4 for the block 34d.

Then a step 8 stores the data transferred to the microprocessor 6 into the memories corresponding to the blocks, while detecting the peak value in each block. A succeeding step 9 discriminates whether the input of all the data is completed, and, if not completed, the sequence returns to the step 7 to repeat the setting of the gain for the next block and the data storage in the memory. When the input of data of all the blocks is completed, the sequence proceeds to a step 10.

The step 10 executes the calculation for focus state detection on four sets of paired data stored in the memories, thus providing four results at maximum. Then a step 11 selects a result representing, for example, the shortest distance, and a step 12 drives the objective lens 1 to the in-focus position by the motor 7, according to the thus selected result.

When a next step 13 identifies the infocus state of the objective lens 1, the focus state detecting operation is terminated. On the other hand, if an out-of-focus state is identified, the sequence returns to the step 4 to repeat the charge accumulation, gain setting of the variable-gain amplifier, data storage in the memories and focus state detection.

The step 13 identifies that the objective lens is in the in-focus state for example if the amount of drive of the motor 7 in the step 12 does not exceed a predetermined value.

If the sequence returns to the step 4, the accumulation time T for the next cycle is determined according to the following equation:

$$T = Tr \times Ps/Pm \times Grm /G0 \tag{9}$$

In this state, the object to be focused is in a block selected in the step 11, and the focus state detection in the next cycle and thereafter should be conducted with the best precision for the object of said selected block. Therefore the peak value of the block selected in the step 11 is used as Pm, and the gain used in the preceding cycle in the selected block is used as Grm. Thus, in the next charge accumulation, data appropriate for the calculation of focus state detection can be obtained with a gain approximately equal to G0, so that the focus state detection can be conducted with satisfactory precision for the object present in the selected block.

Also in the calculation of the equation (9), there may be employed, as Pm, the peak value of a block for which:
(peak value detected in step 7)/(gain calculated in gain 5) is largest, namely a block containing the object of highest brightness, and, as Grm, the gain used in the selected block in the preceding cycle.

If the gain of the variable-gain amplifier of the second controller 5 cannot be varied continuously, the gain setting in the step 7 can be made at a value closest available to the gain calculated in the step 5.

The second embodiment shown in Fig. 10 cannot be applied to a block division in which the adjacent blocks are mutually overlapping as shown in Fig. 7B, but should be applied to a non-overlapping block division as shown in Fig. 7A.

In the following there will be explained a third embodiment of the present invention, in which the coefficients for filtering process conducted prior to the calculation of correlation on the output data from the image sensor arrays are varied according to the peak value of each block, thereby generating data appropriate for the calculation for focus state detection in all the blocks.

This is done, for example in the foregoing equation (3), by varying the denominator "12", or, in the equation (4), by multiplying the part other than the "offset" by a coefficient determined by the peak value.

The function of said third embodiment will be explained in the following with reference to a flow chart shown in Fig. 12.

At first a step 1 executes charge accumulation in such a manner that the peak value in all the data is approximately equal to a predetermined value Ps, and a step 2 stores said data in the corresponding memories, while detecting the peak value in each block. The accumulation time in the above-explained operation is determined either from the output of an unrepresented monitoring photosensor, or from the output of a past charge accumulation conducted at a suitable time.

Then a step 3 determines the coefficients of the filtering process, based on the peak values P1, P2, P3, P4 of the blocks detected in the step 2.

If the filtering is conducted only for the high-frequency component cut-off according to the equation (3), the appropriate coefficients H1, H2, H3, H4 respectively for the blocks 31, 32, 33, 34 are determined as follows:

$$H1 = P1 \times 12/Ps$$

$$H2 = P2 \times 12/Ps$$

$$H3 = P3 \times 12/Ps \qquad \ldots (10)$$

$$H4 = P4 \times 12/Ps$$

Consequently the equations (3) can be transformed as follows:

$$a'(i) = \{2(2i - 1) + 3 \times a(2i) + 4 \times a(2i + 1)$$

$$+ 3 \times a(2i + 2) + a(2i + 3)\}/Hx$$

$$b'(i) = \{b(2i - 1) + 3 \times b(2i) + 4 \times b(2i + 1)$$

$$+ 3 \times b(2i + 2) + b(2i + 3)\}/Hx \qquad (11)$$

wherein $x = 1, 2, 3$ or 4.

On the other hand, if the filtering is conducted only for the low frequency component cut-off according to the equations (4), the coefficients H1, H2, H3, H4 are given as follows:

$$H1 = Ps/P1,$$

$$H2 = Ps/P2,$$

$$H3 = Ps/P3, \qquad \ldots (12)$$

$$H4 = Ps/P4.$$

Thus the equations (4) can be transformed as follows:

$$a''(i) = \{-a(i) + 2 \times a(i + h) - a(i + 2h)\} \times Hx$$

$$+ \text{offset}$$

$$b''(i) = \{-b(i) + 2 \times b(i + h) - b(i + 2H)\} \times Hx$$

$$+ \text{offset} \qquad (13)$$

wherein h and offset are predetermined natural numbers, and $x = 1, 2, 3$ or 4.

If the filtering is conducted for the high frequency component cut-off and the low frequency component cut-off, the coefficients need to be changed only for either filtering. Also there is preferably determined an upper limit for the coefficient H, since an excessively high value thereof deteriorates the precision of focus state detection.

Then a step 4 executes the filtering with modified coefficients for each block, and stores thus filtered data into the corresponding memories, and a step 5 executes the calculation for focus state detection with the filtered data of each block.

The calculation of the step 5 provides four results at maximum, then a step 6 selects therefrom a result for example indicating the shortest distance, and a step 7 drives the objective lens 1 to the in-focus position by the motor 7 according to thus selected result. Then, if a step 8 identifies the in-focus state of the lens 1, the focus state detecting operation is terminated. On the other hand, if an out-of-focus state is detected, the sequence proceeds to a step 9.

The step 9 calculates the accumulation time T of the next cycle as follows:

$$T = Tr \times Ps/Pm \qquad\qquad (14)$$

wherein Tr is the accumulation time in the preceding cycle, and Pm is the peak value of the block selected in the step 6. If the peak value of the already selected block is used as Pm as explained above, the peak value obtained in the next accumulation in the block which was selected in the preceding cycle and which is to be focused can be made approximately equal to the predetermined value Ps appropriate for the calculation for focus state detection. Also the filtering coefficient H is not increased, so that the focus state detection can be executed with satisfactory precision.

Also as Pm of the equations (14), there may be employed the largest one of the peak values P1, P2, P3, P4 detected in the step 2.

A next step 10 executes the charge accumulation of the image sensor arrays with the accumulation time T calculated in the step 9, and the sequence then returns to the step 2 for repeating the above-explained procedure.

In this third embodiment, the gain of the variable-gain amplifier of the second controller 5 can be maintained constant in the ordinary charge accumulation or data transfer, but is controlled under severe photographing conditions. For example there is selected a high or low gain respectively when the entire object field is very dark or very bright.

In the following there is explained the reason for correction, in the third embodiment, not on individual data but in the filtering process.

The A/D converter in the microprocessor 6 generally has a resolving power of 8 or 10 bits, and 1 byte (8 bits) of the memory is usually assigned to a unit of data of the image sensor arrays, since the memory capacity in the microprocessor 6 is limited. Thus the 8-bit data of the image sensor arrays can assume integral values from 0 to 255.

Consequently a fractional number, eventually resulting from a division or a multiplication with a number involving a fractional part, is discarded and only the integral part remains in the memory.

For this reason, if a coefficient multiplication is applied to each of the data of the image sensor arrays, there is generated an error at this stage, so that the resulting data are distorted from the object image formed on the image sensor arrays.

If the filtering for high frequency component cut-off according to the equations (3) is applied to the data involving such error, an additional error is generated in the dividing operation, so that the precision of focus state detection is considerably affected by doubled errors.

However, in the third embodiment explained above, since the coefficients in the filtering are varied according to the peak value of each block, the error is generated only once even after the filtering for the high frequency component cut-off. Also with respect to the filtering for the low frequency component cut-off, the additions and subtractions followed by multiplication as in the third embodiment are more advantageous than the additions and subtractions of plural data already involving errors by multiplication.

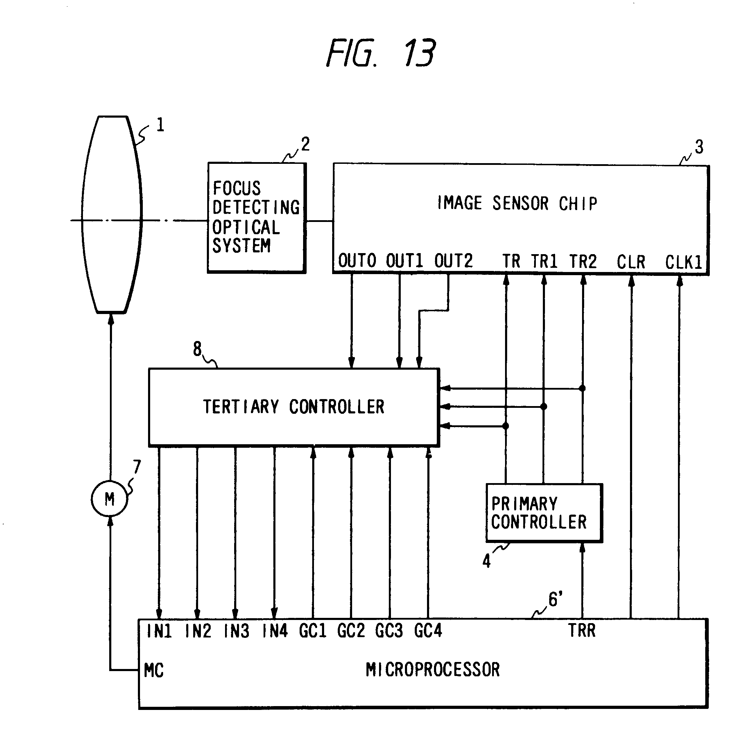

In the following there will be explained a fourth embodiment of the present invention shown in Fig. 13, which is somewhat different from the foregoing three embodiments shown in Fig. 3. In Fig. 13 the same components as those in Fig. 3 are represented by the same numbers and will not be explained further. The structure shown in Fig. 13 is different from that in Fig. 3, in that the microprocessor 6' in Fig. 13 is provided with plural ports GC and IN, and that the second controller 5 with a variable-gain amplifier 5 is replaced by a third controller 8 with plural variable-gain amplifiers.

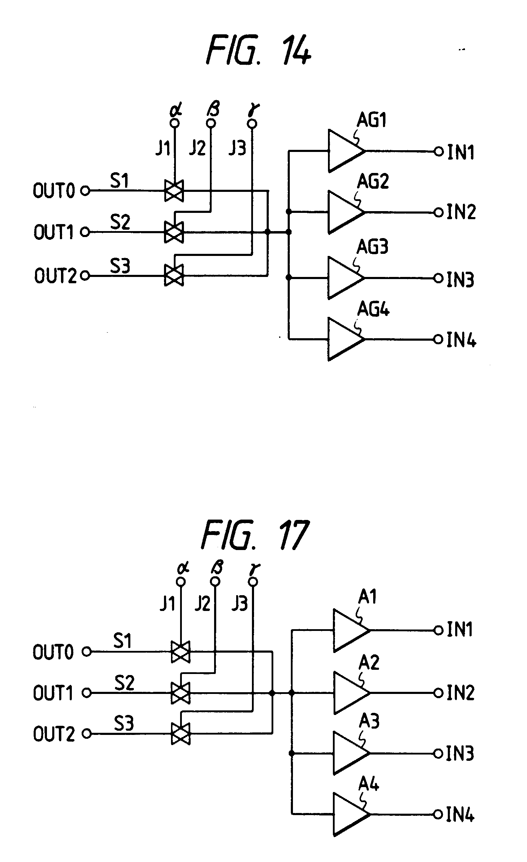

At first the third controller 8 will be explained with reference to Fig. 14, corresponding to Fig. 6B showing the second controller 5. The part shown in Fig. 6A is the same, and is not, therefore, shown again.

The third controller 8 serves to unite three outputs OUT0, OUT1, OUT2 of the image sensor array chip 3 and sends the united output in parallel to four variable-gain amplifiers AG1, AG2, AG3, AG4 for supply to input ports IN1 - IN4 of the microprocessor 6'. The output terminals OUT0, OUT1, OUT2 of the image sensor array chip 3 are connected to switches S1, S2, S3 controlled by signals supplied to terminals J1, J2, J3. The output terminals of said switches are united and connected, in parallel, to variable-gain amplifiers AG1 - AG4, of which gains are respectively controlled by plural digital signals or an analog signal supplied from ports GC1 - GC4 of the microprocessor 6'. The data amplified in said amplifiers AG1 - AG4 with respectively different gains are supplied to the microprocessor 6' through the input ports IN1 - IN4. Consequently, the output of each pixel in the image sensor arrays is supplied to the microprocessor 6' simultaneously with four different gains.

Different from the aforementioned microprocessor 6, the microprocessor 6' has functions of setting the gains for four variable-gain amplifiers and receiving the data from four input ports. The gains of the four variable-gain amplifiers AG1 - AG4 are respectively so selected that the data from the blocks 31 - 34 become appropriate for the calculation of focus state detection. Among the four sets of data of different gains simultaneously entered to the input ports IN1 - IN4, there are selected the data from an input port corresponding to the desired block, and stored in the memory. The data of the block 31a or 31b are taken from the input port IN1. Likewise the data of the block 32a or 32b; 33a or 33b; or 34c or 34d are taken respectively from the input port IN2, IN3 or IN4. If the blocks are formed in mutually overlapping manner as shown in Fig. 7B, the data of the overlapping area are taken from two input ports corresponding to the blocks to which said area belongs, and are used for focus state detection in respective blocks. The focus state detection provides four results at maximum, then a result representing for example the shortest distance as explained before, and the objective lens 1 is driven by the motor 7 according to thus selected result.

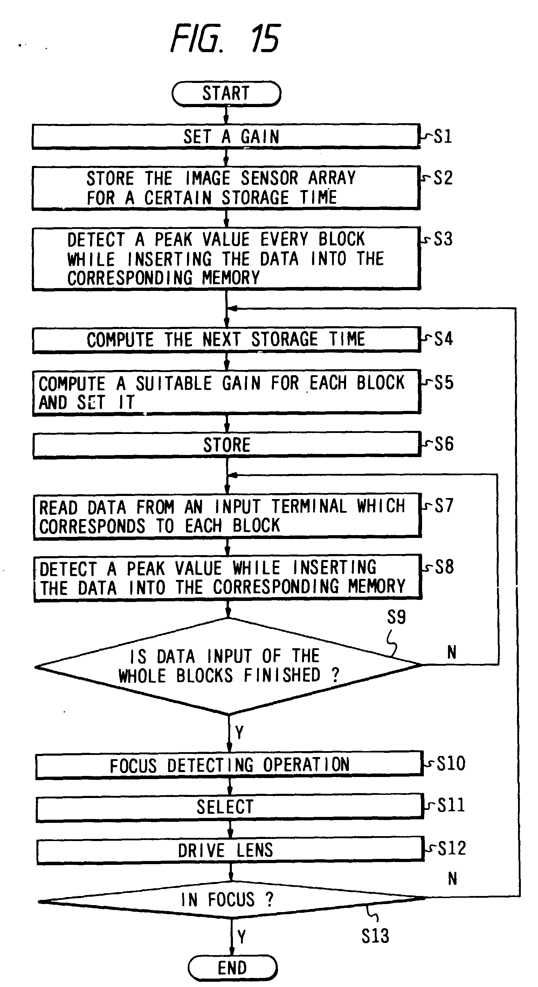

Now the function of the fourth embodiment will be explained with reference to Fig. 15. In said embodiment appropriate gains are applied on the outputs of the blocks to obtain data appropriate for focus state detection in all the blocks.

At first predetermined signals are sent from the ports GC1 - GC4 to the third controller 8 for setting the gains of the variable-gain amplifiers at a basic value G0 (step 1). Said value G0 is preferably set at the lowest possible gain for said amplifiers, because an excessively high gain will deteriorate the S/N ratio of the output signals of the image sensor arrays. Then the charge accumulation is conducted in the image sensor arrays (step 2), and the obtained data are stored in the memories corresponding to the blocks, with detection of the peak value in each block (step 3). Said charge accumulation is conducted for evaluating the contrast of the image of object projected on the image sensor arrays, so that the accumulation time therefor is selected so as not to cause saturation in said A/D conversion and not to obtain an excessively low output, and can be determined, for example, by the output of an unrepresented monitoring photosensor. Then, a step 4 determines the accumulation time T of the next cycle according to the following equation:

$$T = Tr \times Ps/Pm \tag{15}$$

wherein Pm is the largest of the peak values P1, P2, P3, P4 detected in the step 2, and Tr is the accumulation time in the preceding cycle. The charge accumulation conducted in the image sensor arrays with thus calculated accumulation time provides a peak value approximately equal to the predetermined value Ps, among all the outputs of the arrays.

A step 5 determines the gain to be applied to the output of each block, from the peak value in said block, the accumulation time Tr in the preceding cycle and the accumulation time T in the next cycle calculated in the step 4, in such a manner that the peak value of said block becomes equal to the predetermined value Ps. The gains G1, G2, G3, G4 of the variable-gain amplifiers AG1, AG2, AG3, AG4 appropriate for the blocks 31, 32, 33, 34 are determined from the gains Gr1, Gr2, Gr3, Gr4 in the preceding cycle, according to the following equations:

$$
\begin{aligned}
G1 &= Gr1 \times Ps/P1 \times Tr/T, \\
G2 &= Gr2 \times Ps/P2 \times Tr/T, \\
G3 &= Gr3 \times Ps/P3 \times Tr/T, \\
G4 &= Gr4 \times Ps/P4 \times Tr/T.
\end{aligned}
\qquad \ldots \ (16)
$$

As the preceding gain is G0 selected in the step 1, there is obtained:

Gr1 = Gr2 = Gr3 = Gr4 = G0. These values are released from the ports GC1 - GC4 to set the gains of the variable-gain amplifiers AG1 - AG4 of the third controller 8. Then the charge accumulation is conducted in the image sensor arrays with the accumulation time calculated in the step 4 (step 6). At the data transfer from the image sensor arrays after said charge accumulation, the data are received from an input port corresponding to the block of the transferred data (step 7). Thus the data are received from the input port IN1 for the data of the first transferred block 31a; then IN2 for the block 32a; IN3 for the block 33a; and IN4 for the block 34c. Similarly there are used the input port IN1 for the block 31b; IN2 for the block 32b; IN3 for the block 33b; and IN4 for the block 34d. The data thus transferred to the microprocessor 6' are stored in the memory corresponding to each block, with the detection of the peak value in each block (step 8). Then a step 9 discriminates whether the input of all the data is completed, and, if not, the sequence returns to the step 7 for repeating the data input and storage in the memory. If said input is completed, a step 10 executes the calculation for focus state detection, on each of four sets of paired blocks. Said calculation provides four results at maximum, and there is selected a result representing, for example, the shortest distance (step 11). The motor 7 is driven according to thus selected result, thereby moving the objective lens 1 (step 12). If the in-focus state is identified in a step 13, the focus state detecting operation is terminated, but, if not, the sequence returns to the step 4 for repeating the charge accumulation, gain setting of the variable-gain amplifiers, data storage in the memory and focus state detection as explained above. The objective lens is identified as in the in-focus state if the amount of drive of the motor 7 in the step 12 does not exceed a predetermined amount. In case the sequence returns to the step 4, the accumulation time of the next cycle is determined according to the next equation:

$$T = Tr \times Ps/Pm \times Grm/G0 \hspace{3cm} (17)$$

In this state it is already identified from the charge accumulation and calculation in the preceding cycle that the object to be focused is present in a block which has provided the result selected in the step 11, and the focus state detection in the next and ensuing cycles should be made with the best precision for the thus selected object. Thus the peak value of the block which has provided the result selected in the step 11 is used as Pm, and the gain used in said block in the preceding cycle is used as Grm, whereby said block will provide, in the next charge accumulation, data appropriate for the calculation for focus state detection with a gain approximately equal to G0 and the focus state detection with satisfactory precision can be conducted for the object present in said block. It is also possible to employ, as Pm, the peak value of a block in which:

(peak value detected in step 8)/(gain calculated in step 5) is largest, namely a block containing an object of highest brightness, and, as Grm, the gain used for said block in the preceding cycle. If the gain of the variable-gain amplifiers of the third controller 8 cannot be varied in continuous manner, the gain setting in the step 5 may be conducted at a closest available value to the calculated value.

In the foregoing description, the microprocessor is provided with variable-gain amplifiers and input ports of a number equal to the number of blocks, but such number is not limitative. For example there can be obtained sufficient effect with two variable-gain amplifiers and two input ports. In such case the gains of two variable-gain amplifiers are so selected that appropriate data can be obtained from a block with highest peak value and a block with lowest peak value. For said two blocks there are selected the data of an input port corresponding to a variable-gain amplifier with a gain appropriate for each of said blocks. For other blocks, there are selected the data of an input port corresponding to a variable-gain amplifier of which gain is closer to the appropriate level.

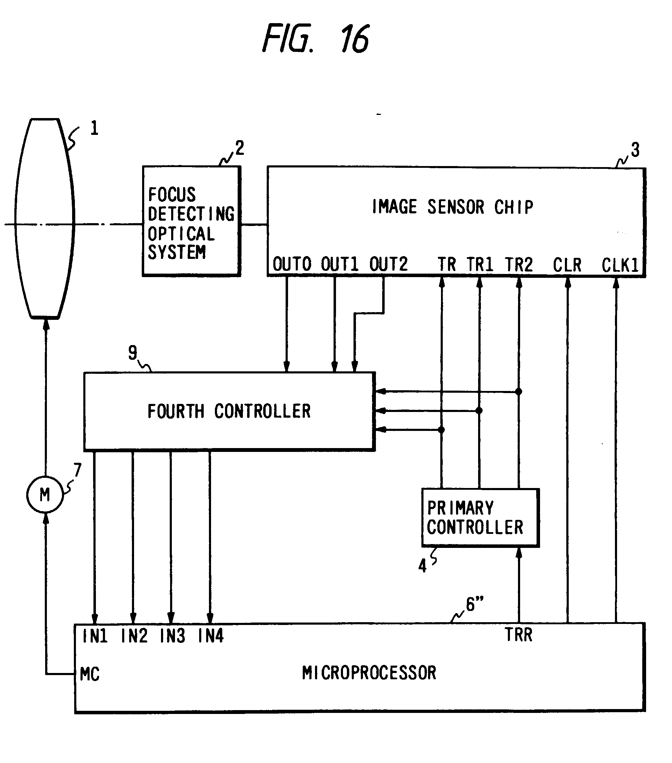

In the following there will be explained a fifth embodiment of the present invention with reference to Fig. 16, in which same components as those in Fig. 13 are represented by same numbers and will not be explained further. The difference between Figs. 16 and 13 lies in a fact that a microprocessor 6" in Fig. 16 is not provided with the ports GC, and that the third controller 8 with plural variable-gain amplifiers is replaced by a fourth controller 9 with plural fixed-gain amplifiers.

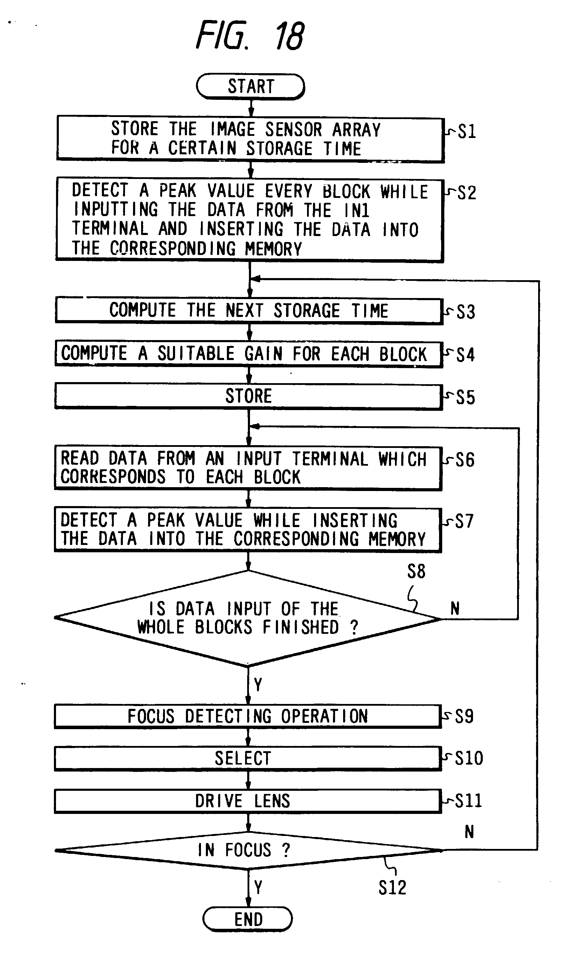

At first the fourth controller 9 will be explained with reference to Fig. 17 which corresponds to Fig. 6B in the second controller 5. A part shown in Fig. 6A is same and will not, therefore, be explained further.

The fourth controller 9 serves to unite the signal released from three output terminals OUT0, OUT1, OUT2 of the image sensor array chip 3, and to send the united signal, in parallel manner, to four amplifiers A1, A2, A3, A4 for signal supply to the input ports IN1 - IN4 of the microprocessor 6". The output terminals OUT0, OUT1, OUT2 of the image sensor array chip 3 are respectively connected to switches S1, S2, S3 shown in Fig. 17, which are controlled by signals supplied to terminals J1, J2, J3. The output terminals of said switches are united, and are connected to the amplifiers A1 - A4. With respect to the gain ka of the amplifier A1, the amplifiers A2 - A4 respectively have gains equal to 2ka, 4ka, 8ka. The data amplified in said amplifiers A1 - A4 with respectively different gains are supplied to the microprocessor 6" through input ports IN1 - IN4. Consequently a pixel in the image sensor array is supplied simultaneously to the microprocessor 6" with four different gains.

The microprocessor 6" controls the charge accumulation in such a manner that the peak value among all the output data of the image sensor arrays assumes a predetermined value when amplified in the amplifier A1 of the lowest gain. At the data transfer, among four sets of data of different gains supplied simultaneously to the input ports IN1 - IN4, there is selected the output of an amplifier of a gain that has brought the peak value of the block closest to the predetermined value. In case the blocks are mutually overlapping as shown in Fig. 7B, the data of the overlapping area can be entered through two input ports corresponding to the appropriate two blocks and are used in the focus state detection in respective blocks. The calculation of focus state detection provides four results at maximum, then there is selected a result representing, for example, the shortest distance, and the motor 7 is driven according to the selected result to drive the objective lens 1.

In the following there will be explained the function of the fifth embodiment, with reference to Fig. 18. Said fifth embodiment is to select most appropriate data for each block, from the outputs of amplifiers of different gains, thereby obtaining the outputs appropriate for focus state detection in all the blocks.

At first the charge accumulation of the image sensor arrays is conducted (step 1), and the data are entered through the port IN1 receiving the output of the amplifier A1 of lowest gain and are stored in the memories corresponding to the blocks, with detection of the peak value in each block (step 2). Said charge accumulation is conducted to evaluate the contrast of the object image projected on the image sensor arrays, so that the accumulation time is so selected as not to cause saturation in the A/D conversion and not to obtain an excessively low output, and is determined for example by the output of an unrepresented monitoring photosensor. Then a step 3 calculates the accumulation time T of the next cycle according to the equation:

$$T = Tr \times Ps/Pm \tag{18}$$

wherein Pm is the largest of the peak values P1, P2, P3, P4 detected in the step 2, and Tr is the accumulation time in the preceding cycle. The charge accumulation of the image sensor arrays with thus calculated accumulation time T will provide a peak value approximately equal to Ps among all the outputs of said arrays.

A step 4 calculates an ideal gain of the amplifier for obtaining a predetermined peak value Ps in each block, from the peak value in said block, the accumulation time Tr in the preceding cycle, the gain in the preceding cycle and the accumulation time T of the next cycle calculated in the step 4. The gains G1, G2, G3, G4 for the blocks 31, 32, 33, 34 can be determined from the following equations, based on the gains Gr1, Gr2, Gr3, Gr4 selected in respective blocks in the preceding cycle:

$$G1 = Gr1 \times Ps/P1 \times Tr/T$$

$$G2 = Gr2 \times Ps/P2 \times Tr/T$$

$$G3 = Gr3 \times Ps/P3 \times Tr/T$$

$$G4 = Gr4 \times Ps/P4 \times Tr/T.$$

In this state, since lowest gain ka was selected in the preceding cycle:
Gr1 = Gr2 = Gr3 = Gr4 = ka. Then the charge accumulation of the image sensor arrays is conducted with the accumulation time calculated in the step 3 (step 5). At the data transfer after said charge accumulation, the data are entered from an input port receiving the output of an amplifier with a gain appropriate for each block of data (step 6). Stated differently, there is selected an input port receiving the output of an amplifier of a gain closest to the ideal gain calculated in the step 4. The data thus transferred to the microprocessor 6" are stored in the memories corresponding to the blocks, with the detection of the peak value in each block (step 7). A step 8 discriminates whether the input of all the data has been completed, and, if not, the sequence returns to the step 6 for repeating the data input and storage in the memories. If said input has been completed, the sequence proceeds to a step 9 for effecting the calculation for focus state detection on four sets of paired blocks. Said calculation provides four results at maximum, and a result is selected representing for example the shortest distance (step 10). Then the motor 7 is driven according to thus selected result, thereby moving the objective lens 1 (step 11). If the objective lens 1 has reached the in-focus position, the focus detecting operation is terminated, but, if not, the sequence returns to the step 3 (step 12), thus repeating the charge accumulation, calculation of ideal amplifier gains, data storage into the memories and focus state detection in the same manner as explained above. The objective lens is identified to have reached the in-focus position, if the amount of drive of the motor 7 in the step 11 does not exceed a predetermined value. When the sequence returns to the step 3, the accumulation time T for the next cycle is calculated according to the following equation:

$$T = Tr \times Ps/Pm \times Grm/ka \tag{20}$$

In this state it is already identified from the charge accumulation and the calculation of the preceding cycle that the object to be focused is present in a block which has provided the result selected in the step 10, and the focus state detection in the next cycle and thereafter should be conducted with best precision for thus selected object. Thus, in the next charge accumulation, by employing the peak value of the block providing the result selected in the step 10 as Pm and the gain applied in said block in the preceding cycle as Grm, said block provides data appropriate for focus state detection with a gain ka, so that the focus state detection can be conducted with satisfactory precision for an object present in said block. It is also possible to employ, as Pm, the peak value of a block in which:
(peak value detected in step 7)/(gain selected in step 6) becomes largest, or a block containing the object of highest brightness, and, as Grm, the gain applied in said block in the preceding cycle.

In contrast to the fourth embodiment utilizing variable-gain amplifiers, the fifth embodiment utilizing fixed-gain amplifiers is not necessarily capable of providing appropriate data in all the blocks, but has the advantage of lighter load on the microprocessor, because of the absence of the ports for gain setting.

As explained in the foregoing, the present invention allows to focus the objective lens securely to the desired object with a high precision, since data appropriate for focus state detection can be obtained in each block of the distance measuring zone even when plural objects of different brightnesses are present in said zone.

**Claims**

1. A focus detecting device, comprising:

   a plurality of groups (31, 32, 33, 34) of photosensors, each group being arranged to receive light from a respective part of an image field and to output a corresponding set of output signals (PH, $PV_1$, $PV_2$) ;
   regulating means (4, 5; 8; 9) for regulating the output signals (PH, $PV_1$, $PV_2$) in accordance with the brightness of the light falling on the photosensors;
   focus information generating means (6; 6'; 6") for receiving the regulated output signals (PH, $PV_1$, $PV_2$) and generating focus information therefrom, and means (6; 6'; 6") for selecting optimum focus information from the focus information derived from the regulated sets of output signals (PH, $PV_1$, $PV_2$);

   characterised in that
   the regulating means (4, 5; 8; 9) includes detecting means (6; 6'; 6") for detecting a plurality of levels each corresponding to one of said sets of output signals and in that the regulating means is arranged to regulate the levels of each set of output signals in accordance with the corresponding one of the detected levels, so that the levels of each regulated set are suitable for generation of focus information by said focus information generating means.

2. A device as claimed in claim 1, wherein the detecting means (6) is arranged to select sets having detected levels which fall outside a predetermined level range and said regulating means (4, 5, 6) is arranged to regulate each of said selected sets so that a level of the regulated selected set, which corresponds to the detected level of the unregulated selected set, falls within said predetermined level range.

3. A device as claimed in claim 1 or 2, wherein said photosensors are of the charge accumulation type-and the regulating means (4, 5, 6; 8, 6'; 9, 6") is arranged to determine a charge accumulation time for the set of output signals (PH, $PV_1$, $PV_2$) from each said group (31, 32, 33, 34) of photosensors in accordance with the corresponding one of the detected levels.

4. A device as claimed in claim 3, wherein the regulating means (4, 5, 6; 8, 6'; 9, 6") is further arranged to determine said charge accumulation time for a successive focusing operation on the basis of one of said sets of output signals (PH, $PV_1$, $PV_2$) from which said optimum focus information was derived.

5. A device as claimed in one of claims 1 to 4 wherein said regulating means (4, 5, 6; 8, 6') includes a variable gain amplifier (G; AG1-4) for amplifying the output signals (PH, $PV_1$, $PV_2$) and gain control means (6; 6') for controlling the gain (G1-4) of said amplifier (G; AG1-4) in accordance with the detected levels.

6. A device as claimed in claim 5, wherein the gain control means (6; 6') is further arranged to control the gain (G1-4) of said amplifier (G; AG1-4) for a successive focus detection cycle on the basis of one of said sets of output signals (PH, $PV_1$, $PV_2$) from which said optimum focus information is derived.

7. A device as claimed in claim 1, further comprising filter means (6) for applying a filtering process, with predetermined filtering coefficients, to the output signals (PH, $PV_1$, $PV_2$), wherein said regulating means (6) is arranged to determine said filtering coefficients in accordance with said detected levels so as to regulate the respective sets of output signals (PH, $PV_1$, $PV_2$).

8. A device as claimed in claim 7, wherein said regulating means (4, 5, 6) is further arranged to determine said filtering coefficients for a successive focusing operation on the basis of one of said sets of output signals (PH, $PV_1$, $PV_2$) from which said optimum focus information is derived.

9. A device as claimed in any one of claims 1 to 4, wherein said regulating means (6', 8) comprises:

   a plurality of variable gain amplifiers (AG1-4) for amplifying the output signals (PH, $PV_1$, $PV_2$);
   means for determining the gains of said variable gain amplifiers (AG1-4) in accordance with said detected levels; and
means for selecting one of said variable gain amplifiers (AG1-4) for amplifying each of said sets of output signals (PH, $PV_1$, $PV_2$), so as to generate said regulated sets.

10. A device as claimed in any one of claims 1 to 4, wherein said regulating means (6", 9) comprises:

a plurality of amplifiers (A1-4), having respectively different gains, for amplifying the output signals; and means for selecting one of said amplifiers according to each of said detected levels.

11. A device as claimed in claim 9 or 10 arranged to supply each said set of said output signals (PH, $PV_1$, $PV_2$) simultaneously to each of said amplifiers (AG1-4; A1-4) so as to generate each amplified set at the gains of each of said variable gain amplifiers (AG1-4; A1-4).

12. A method of detecting a focus state using groups (31, 32, 33, 34) of photosensors, each group receiving light from a respective part of an image field and outputting a corresponding set of output signals (PH, $PV_1$, $PV_2$); said method comprising:

regulating the output signals (PH, $PV_1$, $PV_2$) in accordance with the brightness of the light falling on the photosensors;
receiving the regulated output signals (PH, $PV_1$, $PV_2$), generating focus information therefrom and selecting optimum focus information from the focus information derived from the regulated sets of output signals (PH, $PV_1$, $PV_2$);

characterised by

detecting a plurality of levels each corresponding to one of said sets of output signals (PH, $PV_1$, $PV_2$); and in that each set of output signals (PH, $PV_1$;$PV_2$) is regulated in accordance with the corresponding one of the detected levels, so that the levels of each regulated set are suitable for generation of focus information.

13. A method as claimed in claim 12, wherein said detecting step includes selecting sets having detected levels which fall outside a predetermined level range, and wherein each of said selected sets is regulated so that a level of the regulated selected set, which corresponds to the detected level of the unregulated selected set, falls within said predetermined level range.

**Patentansprüche**

1. Vorrichtung zum Feststellen des Fokussierzustandes, umfassend:

- mehrere Gruppen (31, 32, 33, 34) Photosensoren, von denen jede Gruppe dazu angeordnet ist, Licht von einem zugehörigen Teil eines Bildfeldes zu empfangen und einen entsprechenden Satz von Ausgangssignalen (PH, $PV_1$, $PV_2$) auszugeben;
- eine Reguliereinrichtung (4, 5; 8; 9) zum Regulieren der Ausgangssignale (PH, $PV_1$, $PV_2$) nach Maßgabe der Helligkeit des auf die Photosensoren fallenden Lichts;
- eine Fokusinformations-Erzeugungseinrichtung (6; 6'; 6") zum Empfangen der regulierten Ausgangssignale (PH, $PV_1$, $PV_2$) und zum Erzeugen von Fokusinformation daraus, und eine Einrichtung (6; 6'; 6") zum Auswählen optimaler Fokusinformation aus der aus den regulierten Sätzen von Ausgangssignalen (PH, $PV_1$, $PV_2$) abgeleiteten Fokusinformation;

dadurch gekennzeichnet, daß
die Reguliereinrichtung (4, 5; 8; 9) eine Detektiereinrichtung (6; 6'; 6") aufweist zum Nachweisen mehrerer Pegel, die jeweils einen der Sätze von Ausgangssignalen entsprechen, und daß die Reguliereinrichtung dazu ausgebildet ist, die Pegel jedes Satzes von Ausgangssignalen nach Maßgabe des entsprechenden Pegels der nachgewiesenen Pegel zu regulieren, so daß die Pegel jedes regulierten Satzes geeignet sind zum Erzeugen von Fokusinformation durch die Fokusinformations-Erzeugungseinrichtung.

2. Vorrichtung nach Anspruch 1, bei der
die Detektiereinrichtung (6) derart ausgebildet ist, daß sie Sätze mit nachgewiesenen Pegeln auswählt, die aus

EP 0 382 564 B1

einem vorbestimmten Pegelbereich herausfallen, und die Reguliereinrichtung (4, 5, 6) dazu ausgebildet ist, jeden der ausgewählten Sätze derart zu regulieren, daß ein Pegel des regulierten, ausgewählten Satzes, welcher dem nachgewiesenen Pegel des nicht-regulierten ausgewählten Satzes entspricht, in den vorbestimmten Pegelbereich fällt.

3. Vorrichtung nach Anspruch 1 oder 2, bei der
die Photosensoren vom Ladungsansammlungstyp sind und die Reguliereinrichtung (4, 5, 6; 8, 6'; 9, 6") dazu ausgebildet ist, eine Ladungsansammlungszeit für den Satz von Ausgangssignalen (PH, $PV_1$, $PV_2$) aus jeder Gruppe (31, 32, 33, 34) Photosensoren nach Maßgabe des entsprechenden Pegels der nachgewiesenen Pegel zu bestimmen.

4. Vorrichtung nach Anspruch 3, bei der
die Reguliereinrichtung (4, 5, 6; 8, 6'; 9, 6") weiterhin dazu ausgebildet ist, die Ladungsansammlungszeit für einen nachfolgenden Fokussiervorgang auf der Basis eines der Sätze von Ausgangssignalen (PH, $PV_1$, $PV_2$) zu bestimmen, von denen die optimale Fokusinformation abgeleitet wurde.

5. Vorrichtung nach einem der Ansprüche 1 bis 4, bei der
die Reguliereinrichtung (4, 5, 6; 8, 6') einen Verstärker (G; AG1-4) für veränderliche Vestärkung enthält, um die Ausgangssignale (PH, $PV_1$, $PV_2$) zu verstärken, ferner eine Verstärkungssteuereinrichtung (6; 6') zum Steuern der Verstärkung (G1-4) des Verstärkers (G; AG1-4) in Abhängigkeit der nachgewiesenen Pegel.

6. Vorrichtung nach Anspruch 5, bei der
die Verstärkungssteuereinrichtung (6; 6') weiterhin dazu ausgebildet ist, die Verstärkung (G1-4) des Verstärkers (G; AG1-4) für einen nachfolgenden Fokusnachweiszyklus auf der Grundlage eines der Sätze von Ausgangssignalen (PH, $PV_1$, $PV_2$), aus denen die optimale Fokusinformation abgeleitet wird, zu steuern.

7. Vorrichtung nach Anspruch 1,
gekennzeichnet durch
eine Filtereinrichtung (6) zum Anwenden eines Filterprozesses mit vorbestimmem Filterkoeffizienten auf die Ausgangssignale (PH, $PV_1$, $PV_2$), wobei die Reguliereinrichtung (6) dazu ausgebildet ist, die Filterkoeffizienten nach Maßgabe der nachgewiesenen Pegel festzulegen, um die jeweiligen Sätze von Ausgangssignalen (PH, $PV_1$, $PV_2$) zu regulieren.

8. Vorrichtung nach Anspruch 7, bei der
die Reguliereinrichtung (4, 5, 6) weiterhin dazu ausgebildet ist, die Filterkoeffizienten für einen nachfolgenden Fokussiervorgang auf der Grundlage eines der Sätze von Ausgangssignalen (PH, $PV_1$, $PV_2$), aus denen die optimale Fokusinformation abgeleitet wird, festzulegen.

9. Vorrichtung nach einem der Ansprüche 2 bis 4, bei der die Reguliereinrichtung (6', 8) aufweist:

   - eine Mehrzahl Verstärker (AG1-4) veränderlicher Verstärkung zum Verstärken der Ausgangssignale (PH, $PV_1$, $PV_2$);
   - eine Einrichtung zum Festlegen der Verstärkung der Verstärker (AG1-4) veränderlicher Verstärkung in Abhängigkeit der nachgewiesenen Pegel; und
   - eine Einrichtung zum Auswählen eines der Verstärker (AG1-4) veränderlicher Verstärkung, um jeden der Sätze von Ausgangssignalen (PH, $PV_1$, $PV_2$) zu verstärken und dadurch die regulierten Sätze zu erzeugen.

10. Vorrichtung nach einem der Ansprüche 1 bis 4, bei der die Reguliereinrichtung (6", 9) aufweist:

   - mehrere Verstärker (A1-4) mit jeweiligen unterschiedlichen Verstärkungen, um die Ausgangssignale zu verstärken, und
   - eine Einrichtung zum Auswählen eines der Verstärker entsprechend den nachgewiesenen Pegeln.

11. Vorrichtung nach Anspruch 9 oder 10,
ausgebildet zum gleichzeitigen Zuführen jedes Satzes der Ausgangssignale (PH, $PV_1$, $PV_2$) zu jedem der Verstärker (AG1-4; A1-4), um dadurch jeden verstärkten Satz von Verstärkungen jedes der Verstärker (AG1-4; A1-4) veränderlicher Verstärkung zu generieren.

19

**12.** Verfahren zum Feststellen des Fokussierzustandes unter Verwendung von Gruppen (31, 32, 33, 34) Photosensoren, von denen jede Gruppe Licht von einem zugehörigen Teil eines Blickfeldes empfängt und einen entsprechenden Satz von Ausgangssignalen (PH, PV$_1$, PV$_2$) ausgibt, umfassend:

- Regulieren der Ausgangssignale (PH, PV$_1$, PV$_2$) entsprechend der Helligkeit des auf die Photosensoren fallenden Lichts;
- Empfangen der regulierten Ausgangssignale (PH, PV$_1$, PV$_2$), Erzeugen von Fokusinformation aus den Signalen und, Auswählen der optimalen Fokusinformation aus der von den regulierten Sätzen von Ausgangssignalen (PH, PV$_1$, PV$_2$) abgeleiteten Fokusinformation,

gekennzeichnet durch

- Nachweisen mehrerer Pegel, die jeweils einem der Sätze von Ausgangssignalen (PH, PV$_1$, PV$_2$) entsprechen; und
- wobei jeder Satz von Ausgangssignalen (PH, PV$_1$, PV$_2$) nach Maßgabe des entsprechenden Pegels der nachgewiesenen Pegel derart reguliert wird, daß die Pegel jedes regulierten Satzes sich zum Erzeugen von Fokusinformation eignen.

**13.** Verfahren nach Anspruch 12, bei dem
der Nachweisschritt beinhaltet:
Auswählen von Sätzen mit nachgewiesenen Pegeln, die aus einem vorbestimmten Pegelbereich herausfallen, wobei jeder der ausgewählten Sätze derart reguliert wird, daß ein Pegel des regulierten ausgewählten Satzes, welcher dem nachgewiesenen Pegel des nicht-regulierten ausgewählten Satzes entspricht, in den vorbestimmten Pegelbereich fällt.

**Revendications**

**1.** Dispositif de détection de la mise au point, comprenant:

une pluralité de groupes (31, 32, 33, 34) de photodétecteurs, chaque groupe étant prévu pour recevoir la lumière provenant d'une partie respective d'un champ de prise de vue et pour délivrer un ensemble correspondant de signaux de sortie (PH, PV$_1$, PV$_2$);
des moyens de régulation (4, 5; 8, 9) régulant les signaux de sortie (PH, PV$_1$, PV2) conformément à l'intensité de la lumière arrivant sur les photodétecteurs;
des moyens produisant l'information de mise au point (6; 6'; 6") accueillant les signaux de sortie régulés (PH, PV$_1$, PV$_2$) et produisant, à partir de ceux-ci, l'information de mise au point et des moyens (6; 6'; 6") sélectionnant l'information de mise au point optimale à partir des informations de mise au point dérivées des ensembles de signaux de sortie régulés (PH, PV$_1$, PV$_2$);

caractérisé en ce que
les moyens de régulation (4, 5; 8; 9) comprennent des moyens de détection (6; 6'; 6") détectant une pluralité de niveaux correspondant chacun à un desdits ensembles de signaux de sortie et en ce que les moyens de régulation sont prévus pour réguler les niveaux de chaque ensemble de signaux de sortie conformément à l'un des niveaux détectés correspondant, afin que les niveaux de chaque ensemble régulé conviennent à la production de l'information de mise au point par lesdits moyens de production de l'information de mise au point.

**2.** Dispositif selon la revendication 1, dans lequel les moyens de détection (6) sont prévus pour sélectionner des ensembles ayant des niveaux détectés qui tombent à l'extérieur d'une gamme de niveaux prédéterminée et lesdits moyens de régulation (4, 5, 6) sont prévus pour réguler chacun desdits ensembles sélectionnés afin qu'un niveau de l'ensemble sélectionné régulé, qui correspond au niveau détecté de l'ensemble sélectionné non régulé, tombe à l'intérieur de ladite gamme de niveaux prédéterminée.

**3.** Dispositif selon la revendication 1 ou 2, dans lequel lesdits photodétecteurs sont du type à accumulation de charges et les moyens de régulation (4, 5, 6; 8, 6'; 9, 6") sont prévus pour déterminer un temps d'accumulation de charges destiné à l'ensemble des signaux de sortie (PH, PV$_1$, PV$_2$) à partir de chacun dedits groupes (31, 32, 33, 34) de photodétecteurs conformément à l'un des niveaux détectés correspondant.

4. Dispositif selon la revendication 3, dans lequel les moyens de régulation (4, 5, 6; 8, 6'; 9, 6") sont en outre prévus pour déterminer ledit temps d'accumulation de charges destiné à une opération de mise au point successive à partir d'un desdits ensembles de signaux de sortie (PH, $PV_1$, $PV_2$) à partir duquel ladite information de mise au point optimale a été dérivée.

5. Dispositif selon l'une quelconque des revendications 1 à 4, dans lequel lesdits moyens de régulation (4, 5, 6; 8, 6') comprennent un amplificateur à gain variable (G; AG1-4) amplifiant les signaux de sortie (PH, $PV_1$, $PV_2$) et des moyens de commande de gain (6; 6') commandant le gain (G1-4) dudit amplificateur (G; AG1-4) conformément aux niveaux détectés.

6. Dispositif selon la revendication 5, dans lequel les moyens de commande du gain (6, 6') sont en outre prévus pour commander le gain (G1-4) dudit amplificateur (G; AG1-1) pendant un cycle de détection de mise au point successif sur la base d'un desdits ensembles de signaux de sortie (PH, $PV_1$, $PV_2$) à partir duquel est dérivée ladite information de mise au point optimale.

7. Dispositif selon la revendication 1, comprenant en outre des moyens formant un filtre (6) appliquant, aux signaux de sortie (PH, $PV_1$, $PV_2$), un processus de filtrage, avec des coefficients de filtrage prédéterminés dans lequel lesdits moyens de régulation (6) sont prévus pour déterminer lesdits coefficients de filtrage conformément auxdits signaux détectés afin de réguler les ensembles respectifs de signaux de sortie (PH, $PV_1$, $PV_2$).

8. Dispositif selon la revendication 7, dans lequel lesdits moyens de régulation (4, 5, 6) sont en outre prévus pour déterminer lesdits coefficients de filtrage destiné à une opération de mise au point successive d'après un desdits ensembles de signaux de sortie (PH, $PV_1$, $PV_2$) à partir duquel est dérivée ladite information de mise au point optimale.

9. Dispositif selon l'une quelconque des revendications 1 à 4, dans lequel lesdits moyens de régulation (6', 8) comprennent:

une pluralité d'amplificateurs à gain variable (AG1-4) amplifiant les signaux de sortie (PH, $PV_1$, $PV_2$);
des moyens déterminant les gains desdits amplificateurs à gain variable (AG1-4) conformément auxdits niveaux détectés; et
des moyens sélectionnant un desdits amplificateurs à gain variable (AG1-4) amplifiant chacun desdits ensembles de signaux de sortie (PH, $PV_1$, $PV_2$) afin de produire lesdits ensembles régulés.

10. Dispositif selon l'une quelconque des revendications 1 à 4, dans lequel lesdits moyens de régulation (6", 9) comprennent:

une pluralité d'amplificateurs (A1-4) ayant des gains respectivement différents, amplifiant les signaux de sortie; et
des moyens sélectionnant un desdits amplificateurs conformément à chacun desdits niveaux détectés.

11. Dispositif selon la revendication 9 ou 10 prévu pour amener chaque ensemble dedits signaux de sortie (PH, $PV_1$, $PV_2$) simultanément à chacun desdits amplificateurs (AG1-4; A1-4) afin de produire chaque ensemble amplifié aux gains de chacun desdits amplificateurs à gain variable (AG1-4; A1-4).

12. Procédé de détection d'un état de mise au point utilisant des groupes (31, 32, 33, 34) de photodétecteurs, chaque groupe accueillant la lumière provenant d'une partie respective d'un champ de prise de vue et délivrant un ensemble correspondant de signaux de sortie (PH, $PV_1$, $PV_2$), ledit procédé comprenant:

la régulation des signaux de sortie (PH, $PV_1$, $PV_2$) conformément à l'intensité de la lumière arrivant sur les photodétecteurs;
la réception des signaux de sortie régulés (PH, $PV_1$, $PV_2$), la production à partir de ceux-ci de l'information de mise au point et la sélection de l'information de mise au point optimale des informations de mise au point provenant des ensembles régulés de signaux de sortie (PH, $PV_1$, $PV_2$) ;

caractérisé par

la détection d'une pluralité de niveaux correspondant chacun à un desdits ensembles de signaux de sortie

(PH, $PV_1$, $PV_2$); et

en ce que chaque ensemble de signaux de sortie (PH, $PV_1$, $PV_2$) est régulé conformément à l'un des niveaux détectés correspondant, afin que les niveaux de chaque ensemble régulé conviennent à la production de l'information de mise au point.

13. Procédé selon la revendication 12, dans lequel ladite étape de détection comprend la sélection d'ensembles ayant des niveaux détectés qui tombent à l'extérieur d'une gamme de niveaux prédéterminée, et dans lequel chacun desdits ensembles sélectionnés est régulé afin qu'un niveau de l'ensemble sélectionné régulé, qui correspond au niveau détecté de l'ensemble sélectionné non régulé, tombe dans ladite gamme de niveaux prédéterminée.

FIG. 1A
PRIOR ART

FIG. 1B
PRIOR ART

*FIG. 2A*

*FIG. 2B*

*FIG. 2C*

*FIG. 2D*

## FIG. 3

FIG. 4

FIG. 5

# FIG. 6A

# FIG. 6B

# FIG. 7A

# FIG. 7B

## FIG. 8A

## FIG. 8B

# FIG. 9

```
                    ┌─────────────┐
                    │   START     │
                    └──────┬──────┘
                           ↓
        ┌──────────────────────────────────┐
        │ STORE THE IMAGE SENSOR ARRAY      │──S1
        │ FOR A CERTAIN STORAGE TIME        │
        └──────────────────┬───────────────┘
                           ↓
        ┌──────────────────────────────────┐
        │ DETECT A PEAK VALUE EVERY BLOCK   │──S2
        │ WHILE INSERTING THE DATA INTO THE │
        │ CORRESPONDING MEMORY              │
        └──────────────────┬───────────────┘
                           ↓
        ┌──────────────────────────────────┐
        │ DETECT A BLOCK OF WHICH A PEAK    │──S3
        │ VALUE IS NOT SUITABLE             │
        └──────────────────┬───────────────┘
                           ↓
                                            S4
    Y ◄───────< ARE PEAK VALUES OF THE >
              <  WHOLE BLOCKS SUITABLE ? >
                           │ N
                           ↓
        ┌──────────────────────────────────┐
        │ COMPUTE A SUITABLE STORAGE TIME   │──S5
        │ FOR THE BLOCK                     │
        └──────────────────┬───────────────┘
                           ↓
        ┌──────────────────────────────────┐
        │            STORE                  │──S6
        └──────────────────┬───────────────┘
                           ↓
        ┌──────────────────────────────────┐
        │ DETECT A PEAK VALUE WHILE INSERTING│──S7
        │ THE DATA INTO THE CORRESPONDING MEMORY│
        └──────────────────┬───────────────┘
                           ↓
        ┌──────────────────────────────────┐
        │     FOCUS DETECTING OPERATION     │──S8
        └──────────────────┬───────────────┘
                           ↓
        ┌──────────────────────────────────┐
        │           SELECT                  │──S9
        └──────────────────┬───────────────┘
                           ↓
        ┌──────────────────────────────────┐
        │         DRIVE LENS                │──S10
        └──────────────────┬───────────────┘
                           ↓
                                       S11      N
                   < IN FOCUS ? >
                           │ Y
                           ↓
                    ┌─────────────┐
                    │    END      │
                    └─────────────┘
```

# FIG. 10

```
                    ┌─────────────┐
                    │    START    │
                    └──────┬──────┘
                           │
    ┌──────────────────────────────────────────┐
    │               SET GAIN                     │──S1
    └──────────────────────┬───────────────────┘
                           │
    ┌──────────────────────────────────────────┐
    │       STORE THE IMAGE SENSOR ARRAY         │──S2
    │       FOR A CERTAIN STORAGE TIME           │
    └──────────────────────┬───────────────────┘
                           │
    ┌──────────────────────────────────────────┐
    │    DETECT A PEAK VALUE EVERY BLOCK         │──S3
    │    WHILE INSERTING THE DATA INTO THE       │
    │    CORRESPONDING MEMORY                    │
    └──────────────────────┬───────────────────┘
                           │
    ┌──────────────────────────────────────────┐
    │       COMPUTE THE NEXT STORAGE TIME        │──S4
    └──────────────────────┬───────────────────┘
                           │
    ┌──────────────────────────────────────────┐
    │  COMPUTE A SUITABLE GAIN FOR EACH BLOCK    │──S5
    └──────────────────────┬───────────────────┘
                           │
    ┌──────────────────────────────────────────┐
    │               STORE                        │──S6
    └──────────────────────┬───────────────────┘
                           │
    ┌──────────────────────────────────────────┐
    │    SET A SUITABLE GAIN FOR THE BLOCK       │──S7
    │    UNDER TRANSFERRING                      │
    └──────────────────────┬───────────────────┘
                           │
    ┌──────────────────────────────────────────┐
    │    DETECT A PEAK VALUE EVERY BLOCK         │──S8
    │    WHILE INSERTING THE DATA INTO THE       │
    │    CORRESPONDING MEMORY                    │
    └──────────────────────┬───────────────────┘
                           │            S9
                      ◇─────────────────◇
                     IS DATA INPUT OF THE      N
                     WHOLE BLOCKS FINISHED ?
                      ◇─────────────────◇
                           │ Y
    ┌──────────────────────────────────────────┐
    │       FOCUS DETECTING OPERATION            │──S10
    └──────────────────────┬───────────────────┘
                           │
    ┌──────────────────────────────────────────┐
    │               SELECT                       │──S11
    └──────────────────────┬───────────────────┘
                           │
    ┌──────────────────────────────────────────┐
    │             DRIVE LENS                     │──S12
    └──────────────────────┬───────────────────┘
                           │                    N
                      ◇─────────────────◇
                         IN FOCUS ?
                      ◇─────────────────◇
                           │ Y        S13
                    ┌──────┴──────┐
                    │     END     │
                    └─────────────┘
```

## FIG. 11

| BLOCK | 31a | 32a | 33a | 31b | 32b | 33b | 34c | 34c |
|-------|-----|-----|-----|-----|-----|-----|-----|-----|
| GAIN  | G1  | G2  | G3  | G1  | G2  | G3  | G4  | G4  |

## FIG. 12

```
                    ( START )
                        │
                        ▼
   ┌──────────────────────────────────────────┐
   │ STORE SO AS TO MAKE A PEAK VALUE IN THE   │─ S1
   │ WHOLE OUTPUT OF THE IMAGE SENSOR EYE      │
   │ THE DESIGNATED VALUE Ps                   │
   └──────────────────────────────────────────┘
                        │◄───────────────────────┐
                        ▼                         │
   ┌──────────────────────────────────────────┐  │
   │ DETECT A PEAK VALUE EVERY BLOCK           │─ S2
   │ WHILE INSERTING THE DATA INTO THE         │  │
   │ CORRESPONDING MEMORY                      │  │
   └──────────────────────────────────────────┘  │
                        │                         │
                        ▼                         │
   ┌──────────────────────────────────────────┐  │
   │ COMPUTE A SUITABLE FILTER FACTOR FOR      │─ S3
   │ EACH BLOCK                                │  │
   └──────────────────────────────────────────┘  │
                        │                         │
                        ▼                         │
   ┌──────────────────────────────────────────┐  │
   │ FILTER EVERY BLOCK WHILE INSERTING THE    │─ S4
   │ DATA INTO THE CORRESPONDING MEMORY        │  │
   └──────────────────────────────────────────┘  │
                        │                         │
                        ▼                         │
   ┌──────────────────────────────────────────┐  │
   │        FOCUS DETECTING OPERATION          │─ S5
   └──────────────────────────────────────────┘  │
                        │                         │
                        ▼                         │
   ┌──────────────────────────────────────────┐  │
   │                 SELECT                    │─ S6
   └──────────────────────────────────────────┘  │
                        │                         │
                        ▼                         │
   ┌──────────────────────────────────────────┐  │
   │               DRIVE LENS                  │─ S7
   └──────────────────────────────────────────┘  │
                        │                         │
          Y             ▼                         │
   ┌─────────◄────< IN FOCUS ? >                  │
   │                   │ N        S8              │
   │                   ▼                          │
   │  ┌───────────────────────────────────────┐  │
   │  │     COMPUTE THE NEXT STORAGE TIME      │─ S9
   │  └───────────────────────────────────────┘  │
   │                   │                          │
   │                   ▼                          │
   │  ┌───────────────────────────────────────┐  │
   │  │                STORE                  │─ S10
   │  └───────────────────────────────────────┘  │
   │                   └──────────────────────────┘
   │
   ▼
( END )
```

## FIG. 13

# FIG. 14

# FIG. 17

# FIG. 15

```
                    ( START )
                        │
    ┌───────────────────────────────────────────┐
    │            SET A GAIN                      │─S1
    └───────────────────────────────────────────┘
                        │
    ┌───────────────────────────────────────────┐
    │     STORE THE IMAGE SENSOR ARRAY           │─S2
    │     FOR A CERTAIN STORAGE TIME             │
    └───────────────────────────────────────────┘
                        │
    ┌───────────────────────────────────────────┐
    │     DETECT A PEAK VALUE EVERY BLOCK        │─S3
    │     WHILE INSERTING THE DATA INTO THE      │
    │     CORRESPONDING MEMORY                   │
    └───────────────────────────────────────────┘
                        │
    ┌───────────────────────────────────────────┐
    │       COMPUTE THE NEXT STORAGE TIME        │─S4
    └───────────────────────────────────────────┘
                        │
    ┌───────────────────────────────────────────┐
    │  COMPUTE A SUITABLE GAIN FOR EACH BLOCK    │─S5
    │  AND SET IT                                │
    └───────────────────────────────────────────┘
                        │
    ┌───────────────────────────────────────────┐
    │              STORE                         │─S6
    └───────────────────────────────────────────┘
                        │
    ┌───────────────────────────────────────────┐
    │  READ DATA FROM AN INPUT TERMINAL WHICH    │─S7
    │  CORRESPONDS TO EACH BLOCK                 │
    └───────────────────────────────────────────┘
                        │
    ┌───────────────────────────────────────────┐
    │  DETECT A PEAK VALUE WHILE INSERTING       │─S8
    │  THE DATA INTO THE CORRESPONDING MEMORY    │
    └───────────────────────────────────────────┘
                        │
                                        S9
                  ╱─────────────╲
                 ╱  IS DATA INPUT ╲         N
                ╱   OF THE         ╲──────────
                ╲ WHOLE BLOCKS      ╱
                 ╲ FINISHED ?      ╱
                  ╲───────────────╱
                        │ Y
    ┌───────────────────────────────────────────┐
    │       FOCUS DETECTING OPERATION            │─S10
    └───────────────────────────────────────────┘
                        │
    ┌───────────────────────────────────────────┐
    │              SELECT                        │─S11
    └───────────────────────────────────────────┘
                        │
    ┌───────────────────────────────────────────┐
    │            DRIVE LENS                      │─S12
    └───────────────────────────────────────────┘
                        │
                                        N
                  ╱─────────────╲
                 ╱   IN FOCUS ?   ╲──────────
                  ╲───────────────╱
                        │ Y        S13
                    ( END )
```

# FIG. 16

# FIG. 18

```
                    ( START )
                        │
                        ▼
        ┌───────────────────────────────┐
        │ STORE THE IMAGE SENSOR ARRAY  │ ─S1
        │ FOR A CERTAIN STORAGE TIME    │
        └───────────────────────────────┘
                        │
                        ▼
        ┌───────────────────────────────┐
        │ DETECT A PEAK VALUE EVERY BLOCK WHILE │ ─S2
        │ INPUTTING THE DATA FROM THE IN1       │
        │ TERMINAL AND INSERTING THE DATA INTO  │
        │ THE CORRESPONDING MEMORY              │
        └───────────────────────────────┘
                        │◄──────────────────┐
                        ▼                    │
        ┌───────────────────────────────┐    │
        │ COMPUTE THE NEXT STORAGE TIME │ ─S3 │
        └───────────────────────────────┘    │
                        │                    │
                        ▼                    │
        ┌───────────────────────────────┐    │
        │ COMPUTE A SUITABLE GAIN FOR EACH BLOCK │ ─S4 │
        └───────────────────────────────┘    │
                        │                    │
                        ▼                    │
        ┌───────────────────────────────┐    │
        │            STORE              │ ─S5 │
        └───────────────────────────────┘    │
                        │◄─────────────┐      │
                        ▼              │      │
        ┌───────────────────────────────┐│    │
        │ READ DATA FROM AN INPUT TERMINAL WHICH │ ─S6│  │
        │ CORRESPONDS TO EACH BLOCK     ││    │
        └───────────────────────────────┘│    │
                        │              │      │
                        ▼              │      │
        ┌───────────────────────────────┐│    │
        │ DETECT A PEAK VALUE WHILE INSERTING │ ─S7│  │
        │ THE DATA INTO THE CORRESPONDING MEMORY │  │
        └───────────────────────────────┘│    │
                        │              │      │
                        ▼         S8   │      │
                   ╱─────────────╲    │      │
                  ╱ IS DATA INPUT OF THE ╲  N │      │
                  ╲ WHOLE BLOCKS FINISHED ? ╱──┘      │
                   ╲─────────────╱           │
                        │ Y                  │
                        ▼                    │
        ┌───────────────────────────────┐    │
        │  FOCUS DETECTING OPERATION    │ ─S9 │
        └───────────────────────────────┘    │
                        │                    │
                        ▼                    │
        ┌───────────────────────────────┐    │
        │            SELECT             │ ─S10│
        └───────────────────────────────┘    │
                        │                    │
                        ▼                    │
        ┌───────────────────────────────┐    │
        │          DRIVE LENS           │ ─S11│
        └───────────────────────────────┘    │
                        │              N      │
                        ▼                     │
                   ╱─────────────╲           │
                  ╱   IN FOCUS ?   ╲──────────┘
                   ╲─────────────╱    S12
                        │ Y
                        ▼
                    ( END )
```